# EUROPÄISCHE PATENTSCHRIFT

(11) **EP 3 539 713 B1**
(45) Veröffentlichungstag und Bekanntmachung des Hinweises auf die Patenterteilung: **13.04.2022**
(21) Anmeldenummer: 18401029.6
(22) Anmeldetag: 14.03.2018
(51) Int. Cl.: B23K 31/12, B23K 11/26, B23K 11/24, B23K 11/25

(54) **VERFAHREN UND VORRICHTUNG ZUM QUALITÄTSAUSWERTEN BEIM WIDERSTANDSSCHWEISSEN SOWIE COMPUTERPROGRAMMPRODUKT UND STEUERUNGSEINRICHTUNG**
METHOD AND DEVICE FOR QUALITY EVALUATION IN RESISTANCE WELDING, COMPUTER PROGRAM PRODUCT AND CONTROL DEVICE
PROCÉDÉ ET DISPOSITIF D'ÉVALUATION DE LA QUALITÉ DANS LE SOUDAGE PAR RÉSISTANCE AINSI QUE PRODUIT DE PROGRAMME INFORMATIQUE ET DISPOSITIF DE COMMANDE

(43) Veröffentlichungstag der Anmeldung: 18.09.2019
(73) Patentinhaber: GLAMAtronic Schweiß- und Anlagentechnik GmbH, 45966 Gladbeck (DE)
(72) Erfinder: Schütte, Philipp, 40625 Düsseldorf (DE)
(74) Vertreter: Tanner, Lukas

(56) Entgegenhaltungen:
- EP-A1- 3 138 652
- WO-A1-2008/095286
- DE-A1-102014 109 216

## Beschreibung

### TECHNISCHES GEBIET

Die vorliegende Erfindung betrifft ein Verfahren und eine Vorrichtung zum Charakterisieren von widerstandsgeschweißten Schweißbauteilen, insbesondere in konduktiven Kondensatorentladungs-Schweißanlagen, durch Auswerten wenigstens eines Schweißparameters. Ferner betrifft die Erfindung auch die Verwendung von Automatisierungs-Technik für diesen Zweck. Insbesondere betrifft die Erfindung ein Verfahren und eine Vorrichtung gemäß dem Oberbegriff des jeweiligen unabhängigen Anspruchs.

### HINTERGRUND DER ERFINDUNG

Widerstandsschweißen, insbesondere Kondensatorentladungsschweißen (KE-Schweißen) ist ein Verfahren, mittels welchem jegliche Art von Halbzeugen, Zusammenbauteile oder auch Präzisionsbauteile hergestellt werden können, insbesondere auch Bauteile, die hohen Belastungen standhalten müssen, z.B. Getriebebauteile. Beim mit einer Anpresskraft durchgeführten KE-Schweißen (Widerstandspressschweißen) werden zwei Bauteile mit einer vordefinierten Kraft (z.B. 5 bis 300kN, insbesondere 20 bis 100kN) aneinander gepresst, insbesondere an einer Kontaktfläche mit vordefiniertem Querschnitt (insbesondere Ringbuckel), um dann in einem sehr kurzen Zeitintervall (z.B. 10ms) eine große Energiemenge (bis zu 160kJ, z.B. 30kJ) über die Kontaktfläche zu leiten und dadurch ein lokales Aufschmelzen (insbesondere eines Ringbuckels) und stoffschlüssiges Verbinden zu bewerkstelligen. Das Laden eines Kondensators und das Aufbringen der Schweißkraft sind unabhängig voneinander, und können wahlweise auch simultan erfolgen. Die Bauteile werden insbesondere kontinuierlich aneinander gepresst, und in Abhängigkeit des Abschmelzens des Materials an der Kontaktfläche bzw. in Abhängigkeit der Schweißkraft auch auf einander zu bewegt (insbesondere 0.1 bis 2mm, z.B. 0.5 bis 1mm). Der ganze Vorgang dauert üblicherweise nur wenige Millisekunden, z.B. 10ms.

Das KE-Schweißen kann als Widerstandsschweißverfahren, insbesondere Buckelschweißverfahren z.B. durch folgende Merkmale gekennzeichnet werden: kurze Schweißzeiten im Bereich von 3 bis 15ms; Schweißströme von bis zu 1.000kA; vergleichsweise geringe Sekundärspannung in einem Bereich kleiner 40V; hohe Ladespannungen der Kondensatoren bis 4.000V.

Die Bauteile müssen in vielen Fällen bereits vor dem Verschweißen eine hohe Fertigungsgenauigkeit aufweisen. Beispielsweise sollte die Ebenheit der Kontaktfläche kleiner 0.05mm sein. Da die verschweißten Bauteile oftmals auch als Maschinenelemente oder Komponenten mit sicherheitsrelevanter Funktion verbaut werden, ist es erforderlich, mehr oder weniger fehlerfrei zu arbeiten, insbesondere vollautomatisiert bei kurzen Taktzeiten und hohen Stückzahlen, z.B. bei Schweißteilen für die Automobilindustrie (beispielsweise Befestigungen für Fahrersitze). Beispielsweise soll der Abschmelzweg in einem Toleranzbereich kleiner 0.05mm vordefinierbar sein. Eine belastbare Qualitätskontrolle an den Schweißanlagen ist daher von großer Bedeutung, einerseits für die Hersteller der Schweißanlagen und andererseits für die Betreiber dieser Schweißanlagen. Insbesondere muss die Qualitätskontrolle individuell bezüglich jedes Schweißbauteils erfolgen können. Eine Erhebung lediglich von Stichproben ist bei vielen Arten von Bauteilen sehr riskant, mit nicht absehbaren produkthaftungsrechtlichen Folgen. Die Schweißqualität vieler Bauteile muss daher in vielen Bereichen insbesondere auch gemäß der Norm DIN EN ISO 9001 dokumentiert werden.

Die Bemühungen der Hersteller bzw. Betreiber, eine möglichst allumfassende Qualitätskontrolle zu ermöglichen, können unter dem Begriff "quality monitoring" zusammengefasst werden. Für die Betreiber der Schweißanlagen ist es dabei von großem Vorteil, wenn das "quality monitoring" möglichst vollumfänglich während der Produktion erfolgen kann. Zusätzlich zur kontinuierlichen Qualitätskontrolle können Stichproben genommen werden, z.B. im Rahmen von Zug-, Druck- oder Auspressversuchen oder durch Überprüfung der Torsionsfestigkeit. Dabei kann die Qualitätskontrolle sowohl auf statische als auch dynamische Weise erfolgen. Weitere Beispiele für Analysen sind Schliffbilder, Metallografie allgemein, sowie Ultraschall-Untersuchungen. Die stichprobenartige Qualitätskontrolle erfordert jedoch vergleichsweise viel Zeit und kann nicht auf einfache Weise simultan zum Herstellungsvorgang erfolgen. Nicht zuletzt aus Kostengründen bleibt diese Art der Qualitätskontrolle auf einen geringen Anteil der hergestellten Schweißbauteile beschränkt.

Eine Qualitätskontrolle erfolgte bisher üblicherweise durch Auswertung einzelner Peaks bzw. Maxima oder Minima in Kurvenverläufen von Schweißparametern, insbesondere bei vergleichsweise kostengünstigen Bauteilen der Massenherstellung, oder durch Bezugnahme auf eine Hüllkurve bzw. auf ein Paar von die jeweilige Messkurve umhüllenden Hüllkurven, mittels welcher/welchen ein Toleranzbereich um eine Sollkurve definiert wird, insbesondere bei vergleichsweise teuren Bauteilen. Läuft die Messkurve aus dem Toleranzbereich, so ist das entsprechende Schweißbauteil als Ausschuss (n.i.O.) zu kennzeichnen oder muss nachbearbeitet werden. Eine Nachbearbeitung ist in vielen Fällen jedoch nicht möglich, so dass die Teile entsorgt oder recycelt werden müssen. Die Qualitätskontrolle kann dabei beispielsweise bezüglich des Parameters Weg (Absenkweg = Setzweg + Einsinkweg) oder Kraft (Vorkraft, Schweißkraft) erfolgen.

Als weitere wichtige Schweißparameter speziell beim KE-Schweißen können genannt werden: Stromanstiegszeit, Spitzenstrom, Schweißzeit, Stromflusszeit, Effektivwert des Schweißstroms (Integral der Stromstärke über die Schweißzeit). Als Prozessgrößen können genannt werden: Schweißenergie, Ladespannung, Fläche unter der Schweißstromkurve (Strom-Zeit-Integral), Elektroden-Vorkraft, Schweißkraft, Krafteinbruch (Rückgang der Schweißkraft aufgrund Trägheit der Elektroden). Bezüglich weiterer Besonderheiten beim KE-Schweißen wird auch auf das Merkblatt DVS 2911 "Kondensatorentlasungsschweißen" des DSV Deutscher Verband für Schweißen und verwandte Verfahren e.V. verwiesen.

Ein typischer Verlauf einer Widerstandsschweißung lässt sich wie folgt beschreiben: Nach dem Einlegen der Fügeteile bzw. Schweißbauteile werden die Elektroden geschlossen und es wird zunächst eine Vorkraft aufgebaut, dann erfolgt eine Teilekontrolle, daraufhin wird eine Schweißkraft aufgebaut, und optional wird eine Vorhaltezeit eingehalten. Daraufhin wird die Entladung initiiert. Dabei durchläuft die Stromstärke eine sinusförmige bzw. sinusartige Kurve mit abflachender Flanke, und die Schweißkraft erfährt einen Krafteinbruch aufgrund einer Relativbewegung der Fügeteile aufeinander zu. Erfahrungsgemäß ist der Schweißvorgang nach Abfall auf die halbe maximale Stromstärke beendet. Nach Erreichen der Stromstärke NULL werden die Elektroden wieder geöffnet und das verschweißte Schweißbauteil wird entnommen oder ausgeworfen bzw. ausgeschleust.

Bisher ist es üblich gewesen, den Maximalwert der Stromstärke bzw. dessen Zeitpunkt zu überwachen und wahlweise auch bei der Steuerung der Schweißanlage zu berücksichtigen.

Die Veröffentlichung EP 0 373 422 A1 beschreibt unabhängig von der Art des Schweißparameters ein Hüllkurvenkriterium für die Qualitätsanalyse. Auch die Patentschrift DE 31 21 497 C2 beschreibt die Qualitätsanalyse durch Bezugnahme auf ein Toleranzband.

Die EP 1 249 298 B1 beschreibt ein Verfahren zur Qualitätskontrolle beim konventionellen frequenzabhängigen Widerstandspunktschweißen von Blechen und Drähten, bei welchem der Schweißstrom an der Schweißstelle durch Erfassen der ersten und zweiten Ableitung des Wechselstromes nach der Zeit ausgewertet wird, wobei die Qualitätsanalyse durch Korrelation der zweiten oder dritten Ableitung des Stromes nach der Zeit mit einer Qualitätsgröße erfolgt, insbesondere unter Berücksichtigung der Frequenz. Optional wird der Frequenzgang der wahlweise ersten bis dritten Ableitung dabei durch ein neuronales Netzwerk untersucht.

Die DE 10 2014 109216 A1 und die EP 3 138 652 A1 offenbaren beide Verfahren zur Qualitätsbewertung widerstandsgeschweißter Werkstücke mithilfe der gemessenen Stromstärke. Die DE 10 2014 109216 A1, beschreibt den Gegenstand des Oberbegriffs des Anspruchs 1.

Es hat sich nun gezeigt, dass sowohl die Auswertung basierend auf Peaks als auch die Auswertung mittels Hüllkurven das jeweilige Schweißbauteil nur grob charakterisieren kann. Wünschenswert ist eine detailliertere Auswertung und eine belastbarere, exaktere Charakterisierung.

### ZUSAMMENFASSUNG DER ERFINDUNG

Aufgabe ist, ein Verfahren und eine Vorrichtung zur Qualitätsüberwachung an Schweißanlagen oder zur Steuerung von Widerstandsschweißanlagen bzw. zur Qualitätskontrolle von widerstandsgeschweißten Bauteilen bereitzustellen, womit die Qualität möglichst exakt oder auch hinsichtlich einer großen Anzahl von Kriterien oder auch auf besonders flexible Weise für unterschiedliche Arten von Schweißungen ausgewertet werden kann, insbesondere beim Kondensatorentladungsschweißen (KE-Schweißen). Auch eine Aufgabe ist, das Verfahren bzw. die Vorrichtung so auszugestalten, dass die Schweißbauteile hinsichtlich wenigstens eines Schweißparameters auf flexible oder individuelle Weise analysiert werden können. Nicht zuletzt ist es eine Aufgabe, Schweißbauteile möglichst zeitnah während des Widerstandsschweißens zu charakterisieren oder eine Widerstandsschweißanlage in Abhängigkeit der erfassten und ausgewerteten Kenngrößen anzusteuern, insbesondere derart, dass eine bauteilspezifische Rückverfolgung ermöglicht wird.

Zumindest eine dieser Aufgaben wird durch ein Verfahren gemäß Anspruch 1 sowie durch eine Vorrichtung gemäß dem nebengeordneten Vorrichtungsanspruch gelöst. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist.

Bereitgestellt wird ein Qualitätsauswerteverfahren zum Charakterisieren von widerstandsgeschweißten Schweißbauteilen, insbesondere in konduktiven KE-Schweißanlagen, durch Auswerten wenigstens eines Schweißparameters aus der Gruppe: Schweißstrom, Schweißspannung, Schweißkraft (insbesondere entsprechend einer Anpresskraft der Elektroden aneinander), Widerstand, Abschmelzweg (entsprechend einer relativen Verlagerung der Fügeteile zueinander), Schweißzeit; wobei ein erfasster Verlauf des auszuwertenden Schweißparameters als (simultan zum Schweißen gemessene oder bereits abgespeicherte) Kurve des jeweiligen Schweißparameters bereitgestellt wird. Weiter wird vorgeschlagen, ferner folgende Schritte durchzuführen:
Auswerten der Kurve durch Auslesen wenigstens einer Kenngröße der jeweiligen Kurve, insbesondere der Steigung und/oder eines Gradienten, als Funktion der Zeit (zeitlicher Verlauf) und wahlweise auch als Funktion wenigstens eines weiteren der Schweißparameter; Vergleichen der Kenngröße, insbesondere Vergleichen der Steigung und/oder eines Gradienten, mit wenigstens einem (insbesondere für das jeweilige Schweißbauteil spezifisch vorgebbaren) Sollwert für die Kenngröße, insbesondere mit einem Mindest- und/oder Mittel- und/oder Maximalwert, insbesondere mit Zeitbezug, wobei der Sollwert basierend auf dem erfassten Verlauf oder Gradienten des auszuwertenden Schweißparameters definiert ist/wird; und Auswerten der Qualität des Schweißbauteils basierend auf dem Vergleich der Kenngrößen bzw. basierend auf dem Vergleich der Schweißparameter, insbesondere in Hinblick auf den Betrag einer Abweichung der Kenngröße vom Sollwert. Die Definition des Sollwertes aus der Kurve selbst ermöglicht insbesondere auch eine individuelle Bezugnahme auf die jeweilige Schweißung. Dabei kann insbesondere auch ein einzelner Gleichstromimpuls oder eine Mehrzahl aufeinanderfolgender Gleichstromimpulse ausgewertet werden.

Dieses Verfahren kann insbesondere ohne Hüllkurven funktionieren. Das Auswerten kann automatisiert erfolgen, insbesondere durch Bezugnahme auf in einer Tabelle hinterlegte Sollwerte. Die Auswertung basierend auf Kurvendiskussion bezüglich einzelner Schweißparameter kann insbesondere eine höhere Genauigkeit liefern als eine Analyse ausschließlich in Bezug zu maximalen Toleranzgrenzen (Hüllkurven-Kriterium).

Erfindungsgemäß wird die Qualitätskontrolle bei Schweißbauteilen erleichtert, und die Analyse wird vergleichsweise exakt und belastbar. Im Gegensatz zum Hüllkurven-Toleranzkriterium, bei welchem lediglich eine Überschreitung gewisser Toleranzbereiche ausgewertet wird, kann mittels einer Kurvendiskussion eine tiefergehende Analyse insbesondere auch hinsichtlich nur sehr kleiner, möglicherweise noch im Toleranzbereich liegender Abweichungen erfolgen, also auch eine Ursachenforschung hinsichtlich bestimmter Unregelmäßigkeiten. Ein oder mehrere Auswertekriterien können dabei deutlich gezielter oder anwendungsspezifischer als beim Hüllkurven-Toleranzkriterium definiert werden.

Das Auswerten der Kurve kann dabei einer Kurvendiskussion hinsichtlich einer Mehrzahl von Kennzahlen einer jeweiligen Kurve entsprechen. Die Kurve bzw. der Verlauf des Schweißparameters kann durch übliche Messmethoden erfasst und dabei auch in einem Datenspeicher abgespeichert und für das Auswerten ausgelesen werden, wahlweise simultan bzw. in Echtzeit, oder im Nachgang zur Schweißung. Eine Schweißparametererfassung kann dabei auf vorbekannte Weise erfolgen, insbesondere mit vorbekannter Sensorik, z.B. auch mittels eines Wegsensors (Erfassung des Abschmelzweges) und/oder einer Rogowskispule (Erfassung des Schweißstroms).

Das Charakterisieren kann als eine Bewertung von Eigenschaften der Schweißbauteile verstanden werden, insbesondere mittelbar über den Schweißstrom. Dabei können auch z.B. der Abschmelzweg und/oder eine Schweißnahtbreite ausgewertet werden. Über den Abschmelzweg kann beispielsweise auf die Schweißnahtbreite bzw. auf die Anbindungs-/Stoffschlussfläche zwischen den Fügeteilen geschlossen werden. Auch hat sich gezeigt, dass eine Korrelation zwischen Stromverlauf und dem Auftreten von Schweißspritzern ausgewertet werden kann. Das Charakterisieren kann ein Kennzeichnen des Schweißbauteils umfassen, insbesondere in einer Tabelle, welche eine nachträgliche optionale Korrelation der Parameter bzw. Kurven mit dem jeweiligen Schweißbauteil ermöglicht, insbesondere bei Rückverfolgung von Herstellungsschritten, z.B. bei Materialversagen. Das Charakterisieren kann dabei auch die (Daten-)Basis für eine Regelschleife zum Kontrollieren des Schweißprozesses liefern, oder zumindest zum Kennzeichnen von mangelhaften Schweißbauteilen (Ausschuss).

Ein jeweiliger Sollwert kann dabei auch in Abhängigkeit von der Art der Schweißung oder von der Art der Fügeteile definiert werden.

Bisher erfolgte insbesondere beim KE-Schweißen üblicherweise lediglich das Auswerten von Minima und Maxima (insbesondere der Stromkurve) und eines zeitlichen Bezuges. Dellen oder sonstige lokale Auf- und AbBewegungen der Kurve können bisher gar nicht, oder zumindest nicht auf zufriedenstellende Weise erkannt werden. Im Gegensatz dazu ermöglicht die Genauigkeit des erfindungsgemäßen Verfahrens auch ein automatisches Ausschleusen von Ausschuss-Teilen (so genannte "nicht in Ordnung" n.i.O.-Teile) während der Produktion/Herstellung.

Erwähnenswert ist, dass eine Steuerung bzw. Regelung von KE-Schweißungen (Verfahren bzw. Anlage) nicht auf einfache Weise möglich ist. Vielmehr werden Kondensatoren mit einer großen Energiemenge geladen, welche dann über einen sehr kurzen Zeitraum von 0.1 bis 1000ms, z.B. 1 bis 100ms, insbesondere 2 bis 50ms entladen wird. Bildlich gesprochen, werden Schleusentore geöffnet, und auf den sich dann ergießenden Strom kann nicht auf einfache Weise Einfluss genommen werden. Eine anlagentechnische Regelung war zumindest bisher nicht denkbar. Einen großen Vorteil kann die vorliegende Erfindung daher bereits dadurch liefern, dass mangelhafte Teile (so genannte n.i.O.-Teile) durch die neue Erkennungsmethodik besser erkannt und wahlweise auch ausgeschleust werden können, insbesondere direkt nach dem Schweißvorgang bei automatisiertem Prozess mit hohen Stückzahlen.

Indem der Sollwert basierend auf dem erfassten Verlauf des auszuwertenden Schweißparameters definiert ist/wird, kann individuell auf einen jeweiligen Schweißvorgang Bezug genommen werden. Insbesondere ist es nicht erforderlich, mit Hüllkurven zu arbeiten. Dadurch kann das Verfahren auf vergleichsweise flexible, variable Weise auf diverse Schweißbauteile und Eigenheiten von Schweißverfahren individuell angepasst werden. Insbesondere können Knicke oder Dellen besonders leicht detektiert werden, insbesondere bei relativer Bezugnahme auf die im entsprechenden Kurvenverlauf im entsprechenden Zeitabschnitt übliche Krummung bzw. Steigungsänderung.

Bevorzugt ist/wird der Sollwert basierend auf einem zeitlich vorgelagerten Abschnitt des Verlaufs der jeweils ausgewerteten Kurve und/oder dem entsprechenden Abschnitt einer bereits für den jeweiligen Schweißvorgang definierten Normkurve definiert. Der Sollwert kann basierend auf einem aus dem Kurvenverlauf ermittelten Gradienten vorgegeben werden. Der jeweilige Gradient (sei es eine Differenz von Messwerten, sei es ein quadrierter Gradient, oder ein Betragswert) kann wahlweise allein oder in Kombination mit weiteren Kurvencharakteristika den Sollwert liefern.

Als Schweißbauteil ist ein aus wenigstens zwei Fügeteilen durch Stoffschluss hergestelltes Bauteil zu verstehen.

Als Schweißstrom ist insbesondere der während des Verschweißens über die Schweißbauteile (Fügeteile) geleitete Strom zu verstehen. Als Schweißspannung ist insbesondere die während des Verschweißens an den Schweißbauteilen anliegende Spannung zu verstehen. Als Schweißkraft ist insbesondere die während des Verschweißens auf die Schweißbauteile ausgeübte mechanische Kraft der Elektroden zu verstehen. Als Widerstand ist insbesondere der während des Verschweißens über die Schweißbauteile entstehende elektrische Widerstand zu verstehen. Als Abschmelzweg (relative Verlagerung) ist insbesondere eine Wegänderung des einen Fügeteils relativ zum anderen Fügeteil während des Verschweißens zu verstehen, z.B. beim Abschmelzen eines Schweißbuckels zumindest annähernd entsprechend der Höhe des Schweißbuckels.

Neben der erfindungsgemäßen Auswertung kann der Kurvenverlauf von Schweißparametern auch wie folgt gekennzeichnet werden, hier unter Bezugnahme auf eine Stromkurve: Stromanstiegszeit bis zum Erreichen des Spitzenstroms (Maximum); Betrag des Spitzenstroms (Maximum); Schweißzeit als Zeit zwischen dem Erreichen einer Triggerschwelle (insbesondere ≤5 % vom Messbereichsendwert) und dem Abfall auf 50% des Spitzenstroms; Stromflusszeit als Zeit zwischen dem Erreichen der Triggerschwelle (≤5 % vom Messbereichsendwert) und dem Abfall auf 5% des Spitzenstroms (insbesondere für die Bestimmung der Nachhaltezeit zur Vermeidung von Öffnen der Elektroden unter Stromfluss); Effektivwert des Schweißstroms (Integral der Stromstärke über der Schweißzeit).

Als Verlauf ist dabei die Entwicklung des jeweiligen Parameters zu verstehen, insbesondere jeweils als Funktion eines vorgebaren weiteren Parameters, insbesondere als Funktion der Zeit. Als Kurve ist dabei die erfasste oder abgespeicherte Messkurve zu verstehen, in einer jeweils gewählten Darstellung, insbesondere als Funktion wenigstens eines weiteren der Parameter. Je nach gewähltem Maßstab oder Bezugsparameter kann die Kurve sich verändern. Der Verlauf bzw. die Entwicklung des Parameters bleibt davon jedoch unberührt.

Als Sollwert ist insbesondere ein momentaner bzw. zeitbezogener, kurvenbezogener Toleranzwert zu verstehen. Erfindungsgemäß kann der Sollwert aus dem zeitlichen Verlauf herausgelesen werden, also durch Bezugnahme auf einen zeitlich vorgelagerten Abschnitt der Messkurve, beispielsweise im Zeitintervall von 0.01 bis 0.5ms vor dem Auswerte- bzw. Vergleichszeitpunkt, und wahlweise auch durch Bezugnahme auf einen nachfolgenden Abschnitt, wenn die Auswertung rückblickend erfolgen soll. Die Bezugnahme kann dabei unmittelbar auf einen zuvor gemessenen Abschnitt und/oder auf eine Normkurve erfolgen. Die Definition eines (jüngeren) Sollwertes kann durch Bezugnahme auf frühere (ältere) Messwerte derselben Messkurve erfolgen, so dass ein individueller Erwartungswert aus einem jeweiligen Kurvenverlauf bestimmt werden kann, wahlweise unter Bezugnahme auf eine oder mehrere Normkurven. Dem Sollwert kann dabei auch ein individueller Toleranzbereich zugeordnet werden, entsprechend einem Sollbereich. Der Sollwert wird dabei also nicht einer standardisierten Kurve entnommen, sondern aus dem vorhergehenden Verlauf der auszuwertenden Kurve ermittelt.

Als Gradient ist dabei eine relative Änderung eines vordefinierbaren Abschnitts der jeweiligen Kurve in Bezug auf den zeitlich vorhergehenden Abschnitt zu verstehen, insbesondere ermittelt durch Differenzbildung. Der Begriff "Gradient" kann hier auch den entsprechenden Gradienten in quadrierter Form und/oder den entsprechenden quadrierten Gradienten mit gezogener Wurzel (entsprechend einem Betrags-Wert) umfassen, sofern dies nicht durch expliziten Hinweis ausgeschlossen wird. Das Arbeiten mit einem Gradienten anstelle oder zusätzlich zum Arbeiten mit einer Steigung kann beispielsweise die Definition von Schwellwerten erleichtern und dadurch die Auswertung noch variabler und/oder exakter ausgestalten.

Bisher erfolgte die Auswertung markanter (statischer) Werte insbesondere durch Bezugnahme auf Toleranz-Hüllkurven. Dabei kann auf Minima und Maxima Bezug genommen werden, und es kann ein zeitlicher Bezug dieser Peaks ausgewertet werden. Basierend auf Hüllkurven wird oftmals mit nur einem bestimmten Toleranzwert/-bereich gearbeitet, der jedoch zu breit (zu ungenau) oder zu schmal (zu sensibel) gewählt sein kann. Es hat sich gezeigt, dass ein unstetiger oder nicht monotoner Kurvenverlauf (Delle, Wendepunkte, Schwankung, Unstetigkeit, usw.) bezüglich des jeweiligen Parameters dabei jedoch nicht auf zufriedenstellende Weise registriert oder ausgewertet werden kann. Es hat sich gezeigt, dass die Qualitätssicherung belastbarer werden kann, wenn eine Kurvendiskussion hinsichtlich einzelner Kenngrößen eines zeitlichen Verlaufs vorgenommen wird, insbesondere frequenzunabhängig bei der Auswertung von impulsartigen Gleichstrom-Entladungen.

Im Gegensatz zu einer Auswertung mittels Toleranz-Hüllkurven ermöglicht die erfindungsgemäße Kurvendiskussion bzgl. wenigstens eines Parameters, unstetige oder nicht monotone Kurvenverläufe zu erfassen und auszuwerten. Es können diverse weitere Qualitäts- bzw. Toleranzkriterien definiert werden, z.B. die Steigung der Kurve oder die Änderung der Steigung (Ableitung). Insbesondere können Schweißbauteile charakterisiert werden, bei welchen sich beim Schweißen ein Kurvenverlauf mit einer Delle oder einem Wendepunkt oder einem Peak zeigt. Diese Kurvenverlauf-Toleranzkriterien können auch mit einem oder mehreren Hüllkurven-Toleranzkriterien kombiniert werden.

Als KE-Schweißen ist auch ein Kondensatorimpulsschweißen zu verstehen, also ein Verschweißen mittels von wenigstens einem Kondensator in wenigstens einem Impuls abgegebener Energie.

Gemäß einer Ausführungsform ist/wird der Sollwert basierend auf dem erfassten Verlauf oder Gradienten in einem Zeitintervall von 0.1 bis 1000ms (Millisekunden) vor dem Vergleichszeitpunkt definiert. Dies ermöglicht eine individuelle Bezugnahme auf den jeweiligen Kurvenabschnitt. Dabei kann das Zeitintervall auch durch eine Abtastrate vorgegeben werden.

Gemäß einer Ausführungsform erfolgt das Auswerten der Kurve unabhängig von einer definierten Abtastrate, oder bei einer vordefinierten Abtastrate, wobei der Sollwert basierend auf dem vorhergehenden Abtastwert bzw. der entsprechenden Kenngröße oder basierend auf einer Gruppe von bis zu zehn der vorhergehenden Abtastwerte oder basierend auf einer Gruppe von bis zu 10% aller Abtastwerte definiert ist/wird. Typische Abtastraten liegen z.B. im Bereich von 10kHz bis 20kHz.

Gemäß einer Ausführungsform erfolgt das Auswerten der Kurve bei einer Abtastrate von bis zu 150kHz, insbesondere im Bereich von 1kHz bis mindestens 10kHz oder im Bereich von 2kHz bis mindestens 4kHz, wobei der Sollwert basierend auf dem vorhergehenden Abtastwert bzw. der entsprechenden Kenngröße oder basierend auf einer Gruppe von bis zu zehn der vorhergehenden Abtastwerte oder basierend auf einer Gruppe von bis zu 10% aller Abtastwerte definiert ist/wird. Diese Bezugnahme auf vorhergehende Abtastwerte kann auf vergleichsweise exakte und individuelle Weise ungewöhnliche Schwankungen aufdecken, welche auf eine fehlerhafte Schweißung hinweisen können.

Gemäß einer Ausführungsform wird als Kenngröße zumindest die Steigung (1. Ableitung) und/oder ein Gradient der jeweiligen Kurve ausgewertet, insbesondere ein (wahlweise fiktiver) Nulldurchgang und/oder ein Minimum oder Maximum oder Sattelpunkt oder ein Wendepunkt, insbesondere mit Zeitbezug (bzw. Bezugnahme auf Zeitintervall). Dies ermöglicht z.B. die Auswertung eines Knicks, einer Unstetigkeit, oder einer abnormalen Steigungsänderung. Der Sollwert kann dabei z.B. einer Steigung in einem definierbaren Zeitintervall von mehreren Mikrosekunden oder Millisekunden entsprechen, insbesondere in Abhängigkeit der Abtastrate, beispielsweise entsprechend einem Vielfachen der Zeit zwischen zwei Abtastungen. Bei einer Abtastrate von 100.000Hz ergibt sich selbst bei mehreren Abtastungen nur ein vergleichsweise kleines Zeitfenster. Der Zeitraum kann wahlweise auch deutlich länger sein, oder z.B. 0.5 bis 1ms vor dem auszuwertenden Zeitpunkt liegen bzw. beginnen.

Gemäß einer Ausführungsform wird als Kenngröße zumindest die Ableitung der Steigung und/oder eines Gradienten der jeweiligen Kurve ausgewertet (2. Ableitung), insbesondere ein Nulldurchgang und/oder ein Minimum oder Maximum oder Sattelpunkt oder ein Wendepunkt der Steigung und/oder des Gradienten, insbesondere mit Zeitbezug (bzw. Bezugnahme auf Zeitintervall). Hierdurch kann insbesondere die Krummung der Kurve analysiert werden, so dass auch kleine Dellen (synonym: lokale Wendepunkte, Schwankungen, Unstetigkeiten, usw.) erkannt werden können. Aus dem Verlauf der Steigung oder dem Verlauf der ersten Ableitung der Steigung kann individuell je nach Art des Schweißvorgangs bzw. nach Art der Fügeteile die Qualität ausgewertet werden.

Gemäß einer Ausführungsform erfolgt das Auswerten hinsichtlich einer Monotonie und/oder Stetigkeit der Kurve, insbesondere hinsichtlich einer Abweichung von einer vordefinierbaren Monotonie der Stromkurve. Dies ermöglicht insbesondere auch die Auswertung speziell im steigenden oder fallenden Bereich der Kurve.

Gemäß einer Ausführungsform erfolgt das Auswerten hinsichtlich eines Wendepunktes der zweiten Ableitung der Stromkurve hinter einem Maximum an einer fallenden Flanke der Stromkurve. Gemäß einer Ausführungsform wird die Qualität zumindest auch basierend auf dem Schweißparameter Schweißstrom und der entsprechenden Kennzahl bzw. Kenngröße des zeitlichen Verlaufs des Schweißstroms ausgewertet. Dies liefert Optionen hinsichtlich diverser Aspekte der Auswertung, insbesondere bei guter Reproduzierbarkeit.

Die fallende Flanke der Stromkurve weist erfahrungsgemäß eine monoton fallende negative Steigung auf, und wird dabei erfahrungsgemäß stetig flacher. Es hat sich gezeigt, dass eine Unstetigkeit oder eine Abweichung von einer bestimmten Monotonie oder ein Anstieg oder Abfall der Steigung der Stromkurve mit guter Belastbarkeit und Sicherheit als Hinweis auf eine geminderte Schweißqualität ausgewertet werden kann, insbesondere in einem Bereich bis zum Erreichen des halben Schweißstroms [iₕ] bzw. [1/2iₚ], oder der halben Schweißzeit [tₕ]. Es hat sich gezeigt, dass eine Variation bis zum Erreichen des Zeitpunkts des halben Schweißstroms oder der halben Schweißzeit aussagekräftiger sein kann als eine Variation danach, und dass die entsprechende Auswertung im entsprechenden Zeitfenster auf effiziente Weise genutzt werden kann beim Optimieren des Verfahrens.

Gemäß einer Ausführungsform erfolgt das Vergleichen durch Vergleich des zeitlichen Verlaufs der wenigstens einen Kenngröße der Kurve mit einer Normkurve der entsprechenden Kenngröße, wobei eine Abweichung der Kenngröße vom Sollwert an einer Mehrzahl von Vergleichspunkten der Kurve zu einer Mehrzahl von Messzeitpunkten erfolgt. Dies kann die Auswertung zusätzlich absichern bzw. belastbarer gestalten. Die jeweilige Normkurve kann z.B. aus mehreren Beispielmessungen bzw. Norm-Schweißungen für ein jeweiliges Bauteil bzw. für eine jeweilige Anlage oder ein jeweiliges Werkzeugkonzept definiert werden. Dazu kann bereits eine einzelne Norm-Schweißung dienen, oder auch eine Mehrzahl von z.B. zehn Schweißungen, die allesamt zu guten Schweißteilen geführt haben (in Ordnung (i.O.)-Teile).

Gemäß einer Ausführungsform wird ein Wendepunkt der jeweiligen Kenngröße bzw. deren Verlaufs, insbesondere ein Wendepunkt der Steigung und/oder eines Gradienten ausgewertet. Dies ermöglicht die spezifische Bezugnahme auf bestimmte Phasen oder Zeitpunkte des Schweißvorgangs und kann die Ursachenforschung vereinfachen.

Gemäß einer Ausführungsform wird ein Nulldurchgang oder ein Minimum oder Maximum oder Sattelpunkt der Kenngröße bzw. deren Verlaufs, insbesondere der Steigung und/oder eines Gradienten ausgewertet. Dies vereinfacht auch den Vergleich mit Erwartungswerten und erleichtert das zeitliche Einordnen von charakteristischen Ereignissen hinsichtlich des gesamten Schweißvorgangs. Der Nulldurchgang kann dabei auch ein fiktiver Nulldurchgang bzgl. eines vordefinierbaren Wertes sein, z.B. eines vordefinierten positiven Stromwertes.

Gemäß einer Ausführungsform wird ein Schnittpunkt der jeweiligen Kurve mit einer weiteren Kurve ausgewertet. Dies erweitert die Analyse insbesondere auch bei Mehrfachentladungen. Die weitere Kurve kann z.B. eine bei Mehrfachentladung aus demselben Kondensator oder aus mehreren Kondensatoren erfasst werden, was insbesondere bei Stromkurven eine Analyse von z.B. Anlass-Vorgängen ermöglicht.

Gemäß einer Ausführungsform wird eine Unstetigkeit oder ein unstetiger Verlauf der jeweiligen Kenngröße ausgewertet. Der jeweiligen Unstetigkeit kann dabei insbesondere unter Zeitbezug eine von mehreren möglichen Ursachen zugeordnet werden. Dies erleichtert die Ursachenforschung bzw. die Optimierung der Schweißanlage. Gemäß einer Ausführungsform werden wenigstens zwei oder drei Wendepunkte der jeweiligen Kurve ausgewertet, insbesondere in einem Stromverlauf, insbesondere in einem Zeitintervall von 0.01 bis 100ms. Dies ermöglicht auch eine Korrelation der Kenngrößen derselben Kurve in Relation zueinander, insbesondere bei Zeitbezug, und kann die Zuordnung von Abnormalitäten erleichtern. Das Auswerten von drei Wendepunkten, insbesondere in einem vordefinierten Zeitfenster, kann eine Delle in der Art einer Ausbauchung (Hügel, Welle) identifizieren.

Gemäß einer Ausführungsform erfolgt das Auswerten eines Abschnitts der Kurve nach einem Wendepunkt oder nach einem Maximum bezüglich einer fallenden Flanke der Kurve, insbesondere mit bzw. anhand bzw. basierend auf der Steigungs-Kenngröße. Dies ermöglicht auch eine Analyse des Setzverhaltens und Abschmelzens, also einer Phase, in welcher die Teile aneinander gefügt werden und sich stoffschlüssig miteinander verbinden. Als besonders aussagekräftig hat sich dabei eine Phase bzw. ein Zeitfenster bis zum Abfall auf den halben Schweißstrom erwiesen. Als Flanke ist insbesondere ein von wenigstens einem Minimum, Maximum, Sattel- oder Wendepunkt begrenzter Abschnitt der Kurve zu verstehen.

Erfindungsgemäß werden als Kenngrößen zumindest der Betrag des Schweißstroms und eine Steigungsänderung und/oder Gradientenänderung der Schweißstromkurve sowie der Zeitpunkt des jeweiligen Schweißstroms und der Steigungsänderung ausgewertet (zeitbezogenen Kenngrößen). Die Auswertung speziell von Strom-Messwerten ermöglicht eine vergleichsweise einfache Zuordnung und Fehleranalyse.

Gemäß einer Ausführungsform wird der Vergleich zu wenigstens einem vordefinierten Zeitpunkt im Verlaufe der jeweiligen Schweißung vorgenommen, insbesondere wenn eine Änderungsrate einen Mindestschwellwert überschreitet, insbesondere zeitbezogen. Die Bezugnahme auf die Änderungsrate (insbesondere zeitbezogen jeweils individuelle Änderungsraten) ermöglicht auch das Ignorieren von vermeintlichen Fehlern, und kann die Analyse auf die tatsächlichen Abnormalitäten fokussieren.

Gemäß einer Ausführungsform erfolgt der Vergleich in einem vordefinierten Zeitabstand relativ zu einem Wendepunkt oder Maximum der Kurve, insbesondere bezüglich einem Maximum einer Stromkurve. Dies erleichtert die Zuordnung von erfassten Abnormalitäten und kann zusätzliche Auswahlkriterien bzw. Fehlerkriterien definieren.

Gemäß einer Ausführungsform werden wenigstens drei der Schweißparameter der Gruppe ausgewertet und wahlweise miteinander verglichen, insbesondere vier der Schweißparameter aus der Gruppe. Dies ermöglicht auch eine belastbarere Ursachenforschung, beispielsweise eine Auswertung von Strommesswerten in Bezug auf Widerstands- und/oder Spannungsmesswerte. Bevorzugt werden zumindest sowohl der Schweißstrom als auch der Abschmelzweg ausgewertet.

Gemäß einer Ausführungsform wird das Verfahren für Schweißbauteile aus Leichtbaumaterialien durchgeführt. Dies liefert zuvor genannte Vorteile in besonders spürbarer Weise. Insbesondere kann eine sehr belastbare, reproduzierbare Art und Weise der Auswertung erfolgen. Es hat sich gezeigt, dass beim Schweißen von Leichtbaumaterialien (beispielsweise Aluminium) im Vergleich zum Schweißen von Stahl wenigstens eine für Leichtbaumaterialien charakteristische Variation auftritt, insbesondere beim Abschmelzverhalten, insbesondere im Stromverlauf. Die erfindungsgemäße Auswertung kann mit besonders hoher Belastbarkeit hinsichtlich Leichtbau-Schweißteilen erfolgen (z.B. Aluminium-Stahl-Werkstoffkombination, oder Aluminium-Aluminium), insbesondere hinsichtlich vergleichsweise stark ausgeprägter Dellen (synonym: Wendepunkte, Schwankungen, Unstetigkeiten) im Stromverlauf.

Gemäß einer Ausführungsform wird das Verfahren wiederholt durchgeführt bei mehrstufigem Verschweißen (insbesondere bei sequentiellem Mehrfach-Entladen) basierend auf wenigstens zwei Kurven, insbesondere basierend auf wenigstens zwei unabhängig voneinander erfassten Kurven (insbesondere beim Anlassen oder Spannungsarmglühen des Schweißbauteils) oder basierend auf einem Kurvenpaar, bei welchem eine nachfolgende Kurve von einer fallenden Flanke einer vorhergehenden Kurve abgeht (sequentielles Mehrfach-Entladen insbesondere mittels mehrerer Kondensatoren bzw. Kondensatorbatterien). Dies auch ermöglicht eine belastbare, reproduzierbare Analyse von Mehrfach-Entladungen.

Dabei kann das Auswerten zusätzlich zur Auswertung des zeitlichen Verlaufs auch bezüglich einzelner Punkte oder Peaks (Minimum oder Maximum) der Kurve und/oder bezüglich wenigstens einer (um die Kurve bzw. einseitig oder beidseitig entlang der Kurve gelegten) Hüllkurve erfolgen. Dies erweitert den Umfang der Auswertung und kann auch eine Gegenprüfung erleichtern (Verifizieren von Analyseergebnissen).

Gemäß einer Ausführungsform wird als Schweißstrom ein sinusformartiger Gleichstromimpuls bereitgestellt aus wenigstens einem Kondensator ausgewertet, insbesondere über eine Zeitdauer von 0.1 bis 1000ms (für die Entlade- bzw. Schweißzeit), insbesondere weniger als 10ms. Die Auswertung kann dabei bezüglich einzelner Zeitintervalle (insbesondere <lms) der Kurve erfolgen.

Gemäß einer Ausführungsform erfolgt das Auswerten und/oder Vergleichen frequenzunabhängig, insbesondere ausschließlich basierend auf der Kenngröße Steigung des Stromverlaufs (1. Ableitung der Stromkurve) und/oder Gradient des Stromverlaufs. Die frequenzunabhängige Auswertung liefert eine geradlinige Art der Analyse und kann die Komplexität der Auswertung reduzieren. Erfindungsgemäß ist ein Frequenzbezug nicht notwendigerweise erforderlich. Für die Art und Weise der Auswertung ist es unerheblich, in welchem Zeitrahmen (z.B. zwischen 5 und 20ms) und bei welcher Frequenz die jeweiligen Impuls-Entladungen erfolgen.

Gemäß einer Ausführungsform umfasst das Verfahren ferner den Schritt: Charakterisieren des jeweiligen Schweißbauteils basierend auf dem Vergleich der Kenngröße. Dies ermöglicht nicht zuletzt das Kennzeichnen und Einstufen von korrekt hergestellten Teilen und n.i.O.-Teilen. Das Charakterisieren kann ein Hinterlegen der entsprechenden Daten, wahlweise korreliert mit dem entsprechenden Schweißbauteil, in einem Datenspeicher einer Widerstandsschweißanlage bzw. in einer Steuerungseinrichtung umfassen. Das Charakterisieren kann ein Ansteuern einer Ausgabeeinheit in Abhängigkeit des Vergleichs und der ausgewerteten Qualität umfassen, zum Kennzeichnen qualitätsmangelhafter Schweißbauteile.

Zumindest eine der zuvor genannten Aufgaben wird wie erwähnt auch gelöst durch ein Verfahren zum Ausführen und Qualitätsüberwachen einer Widerstandsschweißung, insbesondere einer Kondensatorentladungsschweißung, mittels eines zuvor weiter oben beschriebenen an einer Widerstandsschweißvorrichtung, wobei das Verfahren beim konduktiven Widerstandspressschweißen durchgeführt wird, insbesondere bei einer Schweißkraft im Bereich von 0.1 bis 1.000kN (kiloNewton); und/oder wobei das Verfahren als Buckel- oder Einpressschweißen durchgeführt wird, wobei eine Kurve des entsprechenden Schweißkraft-Parameters analysiert wird, insbesondere bei einem Schweißstrom im Bereich von 1 bis 10.000kA; und/oder wobei das Verfahren mittels impulsartiger Gleichstrom-Entladung durchgeführt wird. Hierdurch ergeben sich zuvor genannte Vorteile.

Das Verfahren kann beim mehrstufigen Widerstandspressschweißen (Einpressschweißen) durchgeführt werden, indem eine Schweißkraft im Bereich von 0.1 bis 1.000kN oder größer aufgebracht wird und eine Kurve des entsprechenden Schweißkraft-Parameters analysiert wird. Das Verfahren kann beim Widerstandsschmelzschweißen durchgeführt werden, insbesondere bei einem Schweißstrom im Bereich von 1 bis 10.000kA, insbesondere 10 bis 200kA

Gemäß einer Ausführungsform erfolgt während der Schweißung ein Anpassen von wenigstens einem Schweißparameter, insbesondere in Reaktion auf eine Auswertung eines Betrages der Abweichung der Kenngröße vom/von einem Sollwert (Betrag größer als vorgebbare Maximal-Toleranz). Die Anpassung kann beispielsweise hinsichtlich einer Schweißkraft erfolgen, beispielsweise nach Erfassung von zwei bis drei fehlerhaften Teilen. Wahlweise kann auch eine Anpassung der Schweißenergie erfolgen, insbesondere in Hinblick auf eine Schweißstromanpassung (beispielsweise in Reaktion auf ein prozess- oder anlagenbedingtes Absenken des Schweißstroms, beispielsweise basierend auf einer Soll-Vorgabe von 50kA, insbesondere basierend auf einer Tendenz aus den letzten drei oder mehr Schweißungen). Dies ermöglicht eine fortwährende Anlagen- oder Prozessoptimierung und gegebenenfalls auch die Vermeidung einer großen Anzahl von Fehlern im aktuell hergestellten Los (z.B. 100 Stück Schweißbauteile). Dabei ist nicht nur eine Regelung im Nachgang des Prozesses möglich, sondern auch während des Schweißprozesses. Beispielsweise konnte festgestellt werden, dass Schweißspritzer dadurch vermieden werden können, dass schlagartige eine Erhöhung der Schweißkraft erfolgt.

Gemäß einer Ausführungsform umfasst das Verfahren ferner: Ansteuerung einer Ausgabeeinheit und/oder einer Auswerfeinheit der Widerstandsschweißvorrichtung in Abhängigkeit des Vergleichs und der ausgewerteten Qualität, zum Charakterisieren oder zum teil- oder vollautomatischen Auswerfen qualitätsmangelhafter Schweißbauteile, insbesondere während des Schweißens (Kennzeichnen und/oder Ausschleusen von so genannten n.i.O.-Teilen, wahlweise in Echtzeit). Dies verringert auch das Risiko, dass n.i.O-Teile in den Umlauf gelangen. Das Ausschleusen kann auch nachgeschaltet teilautomatisiert oder händisch erfolgen, basierend auf einer maschinellen Kennzeichnung von n.i.O.-Teilen.

Zumindest eine der zuvor genannten Aufgaben wird wie erwähnt auch gelöst durch ein Verfahren zum Herstellen eines widerstandsgeschweißten Schweißbauteils, insbesondere durch Kondensatorentladungsschweißen mittels einer Widerstandsschweißanlage, wobei während des Schweißvorgangs bzw. simultan zum Verschweißen ein zuvor weiter oben beschriebenes Qualitätsauswerteverfahren oder ein zuvor weiter oben beschriebenes Verfahren zum Ausführen und Qualitätsüberwachen ausgeführt wird. Hierdurch ergeben sich zuvor genannte Vorteile.

Zumindest eine der zuvor genannten Aufgaben wird wie erwähnt auch gelöst durch ein Computerprogrammprodukt gemäß Anspruch 13. Hierdurch ergeben sich zuvor genannte Vorteile. Zumindest eine der zuvor genannten Aufgaben wird wie erwähnt auch gelöst durch eine Schweißparameterauswerteeinrichtung gemäß Anspruch 14. Hierdurch ergeben sich zuvor genannte Vorteile.

Die Schweißparameterauswerteeinrichtung weist entsprechende Messeinrichtungen, zum Beispiel Strom-, Spannungs-, Kraft- und/oder Weg-Sensoren auf. Gemäß einer Variante sind die Messeinrichtungen in einer Steuerungseinheit vorgesehen, welche die Widerstandsschweißanlage steuert/regelt.

Gemäß einem Ausfuhrungsbeispiel ist die Schweißparameterauswerteeinrichtung eingerichtet zur Korrelation des jeweiligen Schweißparameters und des entsprechenden Schweißbauteils. Dies ermöglicht auch eine Gruppierung in Fehlerkategorien, oder auch eine Klassifizierung hinsichtlich der Schwere/Relevanz von Abnormalitäten. Dabei kann gleichzeitig eine Anlagen- bzw. Prozessüberwachung erfolgen, beispielsweise basierend auf dem Schweißstrom, denn der über das Schweißbauteil geleitete Strom kann direkt der Anlage zugeordnet werden. Die erfindungsgemäße Analyse kann daher direkt zur Anlagen- bzw. Prozessoptimierung genutzt werden.

Zumindest eine der zuvor genannten Aufgaben wird auch gelöst durch eine Widerstandsschweißvorrichtung mit einer Steuerungseinrichtung gemäß Anspruch 15. Dies liefert zuvor genannte Vorteile. Dazu kann die Steuerungseinrichtung einen Datenspeicher zum Abspeichern wenigstens eines der Schweißparameter aufweisen.

Zumindest eine der zuvor genannten Aufgaben wird auch gelöst durch eine Widerstandsschweißvorrichtung mit einer zuvor beschriebenen Schweißparameterauswerteeinrichtung und/oder mit einer zuvor beschriebenen Steuerungseinrichtung, insbesondere in Ausgestaltung als KE-Schweißanlage. Insbesondere ist die Schweißanlage eingerichtet zum Einstellen wenigstens eines Parameters in einem der folgenden Bereiche: Schweißkraft von 5 bis 300kN, Schweißzeit von 0.1ms bis 1.000ms, Schweißenergiemenge von bis zu 160kJ, Abschmelzweg von 0.1 bis 2mm. Dies liefert zuvor genannte Vorteile.

### KURZE BESCHREIBUNG DER FIGUREN

In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen:
- Figurengruppen 1, 2, 3: jeweils in schematischer Darstellung eine Kurve des Verlaufes des Schweißparameters Schweißstrom und eines diesbezüglichen Gradienten-Parameters, als Datengrundlage für ein Verfahren gemäß einer Ausführungsform;
- Figuren 4A, 4B, 4C, 4D: jeweils in schematischer Darstellung eine Kurve des Verlaufes des Schweißparameters Abschmelzweg (relative Verlagerung) und eines diesbezüglichen Gradienten-Parameters, als Datengrundlage für ein Verfahren gemäß einer Ausführungsform;
- Figur 5: in schematischer Darstellung eine Vorrichtung gemäß einem Ausführungsbeispiel;
- Figur 6A, 6B: jeweils in schematischer Darstellung charakteristische Kurven des Verlaufes des Schweißparameters Schweißstrom jeweils entsprechend einer Mehrfachentladung;
- Figur 7: in schematischer Darstellung eine charakteristische Kurve des Verlaufes des Schweißparameters Schweißstrom in Relation zu einer Normkurve und zu Hüllkurven, als Datengrundlage für ein Verfahren gemäß einer Ausführungsform, unter Einbezug eines Hüllkurvenkriteriums;
- Figur 8: in schematischer Darstellung eine Vorrichtung gemäß einem weiteren Ausführungsbeispiel; und
- Figur 9: in schematischer Darstellung einzelne Schritte eines Verfahrens gemäß einer Ausführungsform.

### DETAILLIERTE BESCHREIBUNG DER FIGUREN

Im Folgenden wird das erfindungsgemäße Verfahren beispielhaft unter Bezugnahme auf einen typischen Stromverlauf P1 beschrieben. Die Erläuterungen können sinngemäß auf einen anderen der hier genannten Schweißparameter übertragen werden, insbesondere auf die Schweißspannung P2, die Schweißkraft P3, den Widerstand P4, und/oder der Abschmelzweg P5, oder auch auf einen weiteren Schweißparameter Pn.

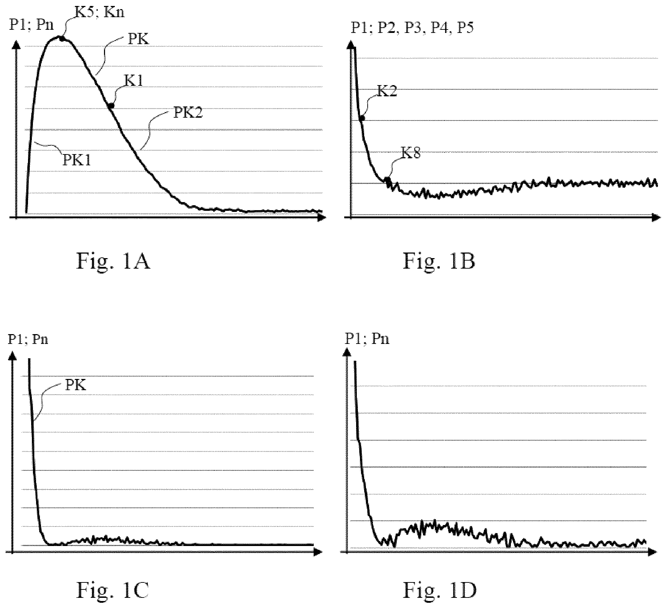

In den Fig. 1A, 1B, 1C, 1D ist ein Vergleich von (betragsmäßigen) Strommesswerten P1 einer Strom-Parameterkurve PK (steigende Flanke PK1, fallende Flanke PK2) mit Sollwerten gezeigt, bzw. eine Bezugnahme von zeitbezogenen Strommesswerten auf Verläufe, Gradienten oder Steigungen jeweils in spezifischen Zeitintervallen. Alle Kurven sind in Bezug auf Abtastwerte (Folgezahlen), aufgetragen auf der Abszisse (beispielsweise 1 bis 150 Abtastwerte), dargestellt.

Die in Fig. 1A dargestellte Kurve PK zeigt den Stromverlauf, wobei einzelne Abtastwerte (Folgezahlen der Abszisse) als Funktion des Stroms (in Kiloampere [kA]; Ordinate, beispielsweise 1 bis 15kA) aufgetragen sind. Ein Vorteil beim Arbeiten mit einer Gradienten-Kenngröße kann in der vergleichsweise einfachen Art und Weise der Definition von Schwellwerten und Ausschluss-Kriterien gesehen werden. Beispielsweise ist am Verlauf des betragsmäßigen Gradienten (Fig. 1D) ersichtlich, dass die Änderungsrate der Messwerte ab einem bestimmten Zeitpunkt immer schwächer wird. Durch Definition eines maximalen Sollwertes für die Änderungsrate können z.B. Dellen (synonym: Wendepunkte, Schwankungen, Unstetigkeiten) im Abklingverhalten vergleichsweise einfach erkannt werden, und zwar individuell, ohne Bezugnahme auf Standard-Hüllkurven. Dies liefert hohe Variabilität bei der Nutzung des Auswerteverfahrens.

Der in Fig. 1A dargestellte Verlauf (sinusformartiges Abklingverhalten der fallenden Flanke PK2) kann als exemplarischer Verlauf einer gesunden, qualitativ hochwertigen KE-Schweißung (i.O.-Teile) angesehen werden. Hervorzuheben sind die folgenden Kenngrößen: K1 entsprechend der ersten Ableitung (hier: Steigung der Stromkurve); K2 entsprechend der zweiten Ableitung; K5 entsprechend einem Maximum; K8 entsprechend einem (fiktiven oder realen) Nulldurchgang; Kn ist als optionale weitere Kenngröße aufgeführt.

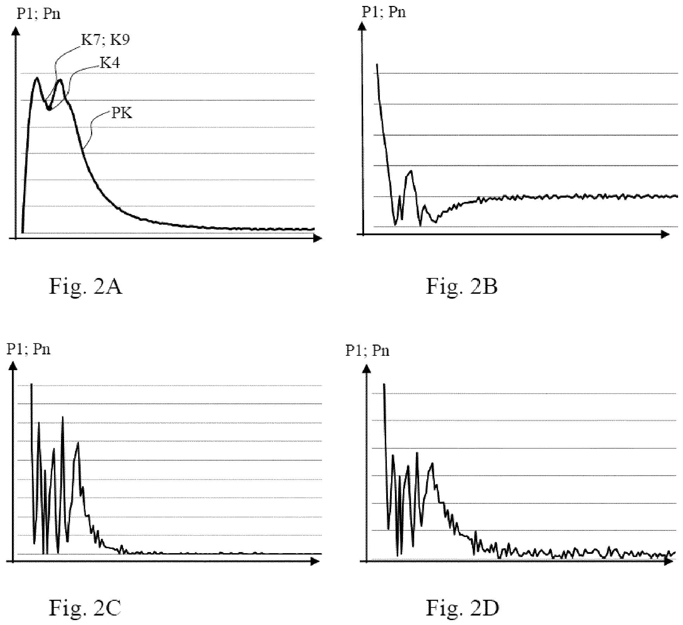

In den Fig. 2A, 2B, 2C, 2D wird eine vergleichbare Illustration unter Bezugnahme auf einen Defekt vorgenommen. Alle Kurven sind in Bezug auf Abtastwerte (Folgezahlen) aufgetragen auf der Abszisse dargestellt. Fig. 2A zeigt Abtastwerte bzw. Folgezahlen, aufgetragen auf der Abszisse, und den Strom in Kiloampere [kA], aufgetragen auf der Ordinate. Hervorzuheben sind die folgenden Kenngrößen: K4 entsprechend einem Minimum; K7 entsprechend einem Sattelpunkt; K9 entsprechend einer Unstetigkeit.

Der in Fig. 2A dargestellte Verlauf (beispielsweise 1 bis 30kA) kann als exemplarischer Verlauf einer fehlerhaften KE-Schweißung (n.i.O.-Teile) angesehen werden (zwei Peaks; Delle nach unten, gekennzeichnet durch mehrere Wendepunkte und optional auch durch Unstetigkeiten; Einbruch des Stromwertes im Bereich des Maximums mit darauffolgendem Anstieg).

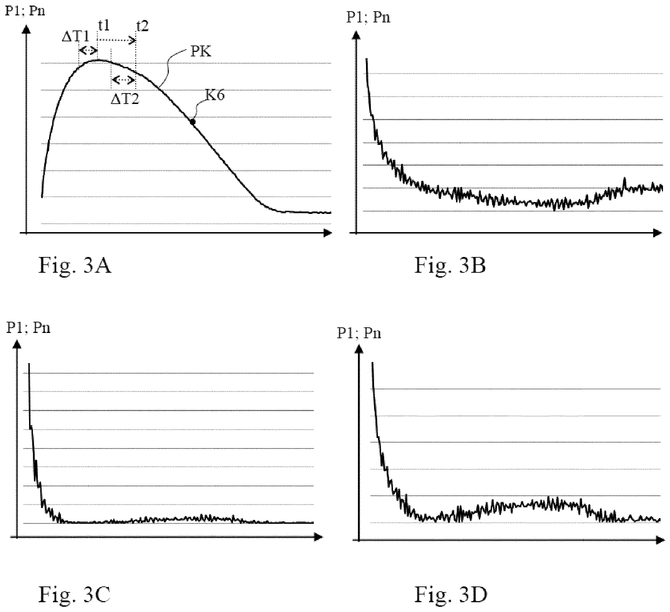

In den Fig. 3A, 3B, 3C, 3D wird eine vergleichbare Illustration unter Bezugnahme auf ein korrekt gefertigtes Schweißbauteil vorgenommen. Alle Kurven sind in Bezug auf Abtastwerte (Folgezahlen, beispielsweise für 200 Abtastwerte) aufgetragen auf der Abszisse dargestellt. Fig. 3A zeigt Abtastwerte bzw. Folgezahlen, aufgetragen auf der Abszisse, und den Strom in Kiloampere [kA], aufgetragen auf der Ordinate (beispielsweise 1 bis 25kA). Der dargestellte Verlauf kann als exemplarischer Verlauf für i.O.-Teile angesehen werden. Im Vergleich zur Figur 1A ist der Stromverlauf langgestreckter (über der Zeit). Sowohl die steigende als auch die fallende Flanke sind weniger steil.

In Fig. 3A werden unterschiedliche Zeitpunkte für eine relative Bezugnahme dargestellt. Ausgehend von einem vordefinierten absoluten Zeitpunkt t1 kann ein vordefinierter Zeitpunkt t2 mit relativem Zeitbezug definiert werden (t1 entspricht z.B. dem absoluten Maximum, und t2 entspricht z.B. einer Millisekunde nach dem absoluten Maximum). Eine Definition von Sollwerten V1, V2, Vn kann nun insbesondere in einem ersten Zeitintervall ΔT1 und/oder in einem zweiten Zeitintervall ΔT2 erfolgen, jeweils unter Bezugnahme auf wenigstens einen der Zeitpunkte t1, t2. Hervorzuheben ist die folgende Kenngröße: K6 entsprechend einem Wendepunkt. Auch diese Kenngröße kann einen der Zeitpunkte für die Bezugnahme zur Sollwertdefinition vorgeben.

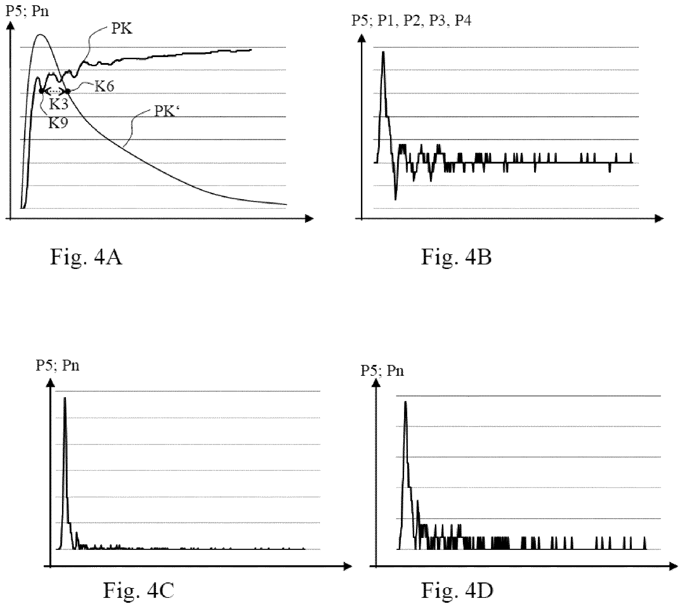

In den Fig. 4A, 4B, 4C, 4D wird eine vergleichbare Illustration unter Bezugnahme auf ein korrekt gefertigtes Schweißbauteil (i.O.-Teil) durch Analyse des Abschmelzweges vorgenommen. Alle Kurven sind in Bezug auf Abtastwerte (Folgezahlen) aufgetragen auf der Abszisse dargestellt. Fig. 4A bezieht sich dabei auf einen Weg-Messwert, insbesondere unmittelbar auf den Abschmelzweg (Abtastwerte bzw. Folgezahlen, aufgetragen auf der Abszisse, und Abschmelzweg in Millimeter [mm], aufgetragen auf der Ordinate). Bei dieser Art Auswertung können beispielsweise zwei Kriterien bzw. Kenngrößen definiert werden, insbesondere ein Schwellwert und das Vorzeichen des Gradienten; eine negative Änderungsrate kann allein oder in Kombination mit weiteren Kenngrößen als n.i.O.-Teil ausgewertet werden. Der dargestellte Verlauf kann als exemplarischer Verlauf einer KE-Schweißung eines Standard-Schweißbauteils oder auch Leichtbauteils angesehen werden. Die im Verlauf des Abschmelzweges herauslesbaren Schwingungen können durch Eigenschwingungen der Anlage begründet sein. Je nachdem, ob sich beim Schweißen eine Frequenz entsprechend der Eigenfrequenz der Anlage einstellt, oder wie nahe eine Schwingung beim Schweißen an der Eigenfrequenz der Anlage angrenzt, erfolgt ein Schwingen mehr oder weniger ausgeprägt. Bei vielen Arten von Schweißungen treten gar keine Schwingungen und damit auch keine Schwankungen im Verlauf der Abschmelzkurve auf. Die Frage, inwieweit ein Schweißteil in Ordnung ist, kann dabei wahlweise unabhängig von diesen Schwingungen analysiert werden, oder unter Berücksichtigung der Schwingungen, insbesondere auch unter Bezugnahme auf eine Schwingungs-Normkurve, die z.B. basierend auf Erfahrungswerten anlagenspezifisch ermittelt werden kann.

In Fig. 4A ist eine Unstetigkeit K9 im Verlauf der örtlichen relativen Verlagerung (Abschmelzweg) zu sehen, eine Art Schwingung. Die Unstetigkeit K9 kennzeichnet z.B. ein kurzzeitiges Stocken oder Abbremsen, möglicherweise bedingt durch einen Ruck oder ein zu überwindendes Hindernis im Material des Bauteils, und/oder anlagentechnisch bedingt durch die Elastizität der Anlage beim Nachsetzen. Unter der Annahme, dass die Anpresskraft konstant geblieben ist, kann beispielsweise auf einen Materialfehler in wenigstens einem der Fügeteile geschlossen werden. Optional kann ein Vergleich mit einer Schwingungs-Normkurve der Anlage erfolgen, wahlweise unter Berücksichtigung der Eigenfrequenz. Hervorzuheben ist die folgende Kenngröße: K3 entsprechend einer relative Position (insbesondere relativer Zeitbezug) der Parameterkurve PK zur Kurve PK' eines weiteren der Parameter, hier beispielhaft zur Stromkurve.

Bei den zuvor diskutierten Messungen kann die Auswertung sowohl bezüglich einer steigenden als auch an einer fallenden Flanke der Kurve erfolgen.

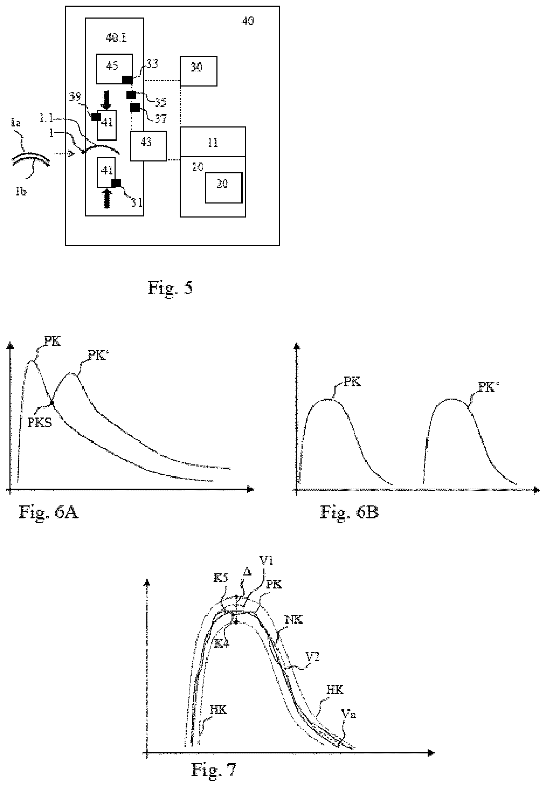

In der Fig. 5 ist eine in eine Widerstandsschweißvorrichtung 40, insbesondere KE-Widerstandsschweißanlage integrierte Schweißparameterauswerteeinrichtung 10 gezeigt. Die Widerstandsschweißvorrichtung 40 umfasst eine Bearbeitungsstation 40.1, wenigstens einen Schweißzylinder 41 (Schweißelektrode, Anpressstempel), wenigstens eine Auswerfeinheit 43 und wenigstens einen Kondensator 45 bzw. eine Kondensator-Batterie.

Ein Schweißbauteil 1 besteht aus einem ersten Fügeteil 1a und einem zweiten Fügeteil 1b, bzw. das Schweißbauteil 1 soll durch Stoffschluss dieser Fügeteile hergestellt werden. Dazu wird das Schweißbauteil 1 an Kontaktflächen 1.1 zwischen den Schweißzylindern 41 verklemmt, mit Schweißkraft beaufschlagt und in Position gehalten. Der Schweißvorgang kann durch Laden des Kondensators 45 und durch eine Initiierung der Entladung initiiert werden (z.B. Thyristor-Zündung). Die Schweißkraft liegt dabei bereits an, und kann wahlweise durch Federkraft und/oder einen Stellantrieb kontinuierlich auf die Fügeteile ausgeübt werden, mit dem Effekt, dass ein Verlagern der Schweißzylinder 41 erfolgt, sobald das Material aufgeschmolzen wird.

Mittels einer Steuerungseinrichtung 30 kann der Prozess überwacht und wahlweise geregelt werden. Die Steuerungseinrichtung 30 kann mit den einzelnen Komponenten interagieren, insbesondere die Auswerfeinheit 43 ansteuern, was durch die Punktlinie angedeutet ist.

In die Widerstandsschweißvorrichtung 40 sind ferner einige Messeinrichtungen bzw. Sensoren integriert, die jeweils in Verbindung mit der Steuerungseinrichtung 30 stehen, und deren Anordnung in Fig. 5 lediglich beispielhaft zu verstehen ist. Erwähnenswert sind insbesondere: erste Messeinrichtung 31, insbesondere Kraftsensor; zweite Messeinrichtung 33, insbesondere Stromsensor (z.B. Rogowskispule oder Rogowskigürtel); dritte Messeinrichtung 35, insbesondere Spannungssensor; vierte Messeinrichtung 37, insbesondere Widerstandssensor; fünfte Messeinrichtung 39, insbesondere Wegsensor. Als weitere Komponenten lassen sich ein Computerprogrammprodukt 20 sowie eine Ausgabeeinheit 11, insbesondere mit Display (Anzeigeeinheit) nennen.

In der Fig. 6A ist eine Mehrfachentladung illustriert, bei welcher die nachfolgende Entladung bereits an der fallenden Flanke der vorhergehenden Entladung einsetzt, beispielsweise entsprechend einem Schweißen auf leitendem Anschlag, bzw. einem Einpressschweißen. Die steigende Flanke der nachfolgenden Schweißung geht von der fallenden Flanke der vorhergehenden Schweißung ab. Diese Art der Mehrfachentladung wird insbesondere mittels mehrerer Batterien bzw. mittels einer Kondensatorbank durchgeführt. Ein solches sequentielles Entladen kann beispielsweise auch mittels einer Mehrzahl von Kondensatoren (Kondensator-Batterie) bewerkstelligt werden. Dabei kann auch eine kombinierte Auswertung erfolgen. Denkbare Mess-Zeitpunkte entsprechend dabei insbesondere auch den jeweiligen Maxima und dem Zeitpunkt, zu welchem die nachfolgende Kurve PK' von der ersten Kurve PK abgeht.

In der Fig. 6B ist eine Mehrfachentladung illustriert, bei welcher die nachfolgende Entladung vollständig entkoppelt und zeitlich nachgelagert nach der vorhergehenden Entladung erfolgt, beispielsweise entsprechend einem Anlassen der Fügezone. Dabei beträgt die Füge- bzw. Schweißkraft jeweils z.B. 3 bis 300kN (wobei die Schweißkraft auch variieren kann), die Schweißzeit z.B. 0.1 bis 1.000ms, und die Schweißenergie z.B. 10kJ oder 50kJ oder bis zu 160kJ, insbesondere in Bezug auf die erste, zeitlich vorgelagerte Kurve. Diese Art der Mehrfachentladung kann auch mittels nur einem einzigen Kondensator durchgeführt werden, welcher wieder aufgeladen wird.

In der Fig. 7 ist ein Hüllkurvenkriterium bzw. ein Toleranzkriterium illustriert. Zwei Hüllkurven HK umhüllen eine Kurve PK wenigstens eines erfassten, auszuwertenden Parameters, und eine Normkurve NK ist als Referenzkurve vorgesehen. Ein Toleranzbereich Δ wird durch den Abstand der beiden umhüllenden Hüllkurven zueinander und wahlweise auch durch einen Abstand der erfassten Kurve PK von der Normkurve NK definiert. Es ist ersichtlich, dass diverse Abnormalitäten und Unstetigkeiten oder Wendepunkte im Verlauf der Messkurve PK nur dann ausgewertet werden können, wenn ein sehr enger Toleranzbereich definiert wird. Ergibt sich jedoch eine Delle (K4, K5; synonym: Wendepunkte mit einer Schwankung in der Art einer Welle bzw. einer Ausbauchung bzw. eines lokalen Peaks in lateraler Richtung) z.B. in einem Bereich nahe der Normkurve NK (noch im Toleranzbereich, innerhalb der von den Hüllkurven HK umgrenzten Toleranz-Zone), so kann diese gar nicht oder zumindest nicht auf einfache Weise erkannt oder ausgewertet werden.

In Abgrenzung zu dieser toleranzbezogenen Auswertung basierend auf standardisierten Toleranzen kann die Auswertung erfindungsgemäß durch Bezugnahme auf aus der Kurve ermittelten Sollwerte V1, V2, Vn erfolgen. Die Sollwerte sind jeweils aus dem vorhergehenden Verlauf ermittelt (was durch die Strichlinie angedeutet wird), insbesondere weniger Millisekunden oder gar Mikrosekunden.

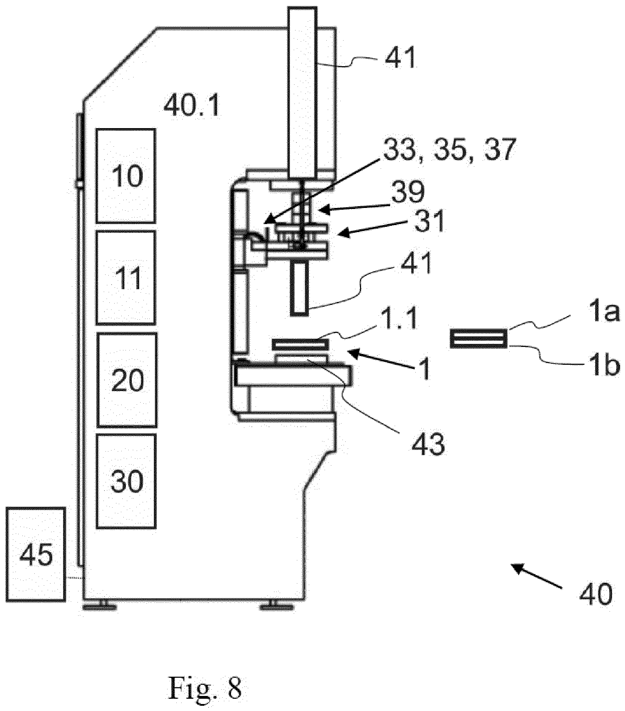

In der Fig. 8 ist eine Anordnung vergleichbar zu jener in Fig. 5 beschrieben.

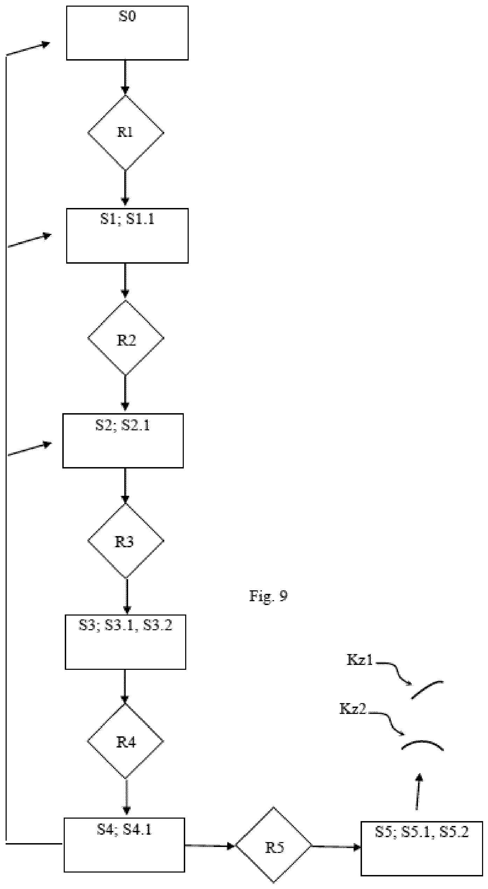

In der Fig. 9 sind Verfahrensschritte und Regelungspunkte beispielhaft illustriert. Die einzelnen Schritte werden im Folgenden chronologisch erläutert. Zunächst erfolgt in einem initiierenden Schritt S0 ein Bereitstellen bzw. Regeln von Schweißparametern, insbesondere Gleichstromparametern. Diesbezüglich kann durch eine Anlage in einem ersten Regelungspunkt R1 ein Regeln von Schweißparametern wie Kraft, Strom, Spannung erfolgen. In einem ersten Schritt S1 erfolgt ein Erfassen und Bereitstellen eines Verlaufes wenigstens eines Parameters P1; Pn. Der erste Schritt kann eine Auswahl S1.1 eines Zeitintervalls im Verlauf umfassen, insbesondere mit relativem Zeitbezug zu wenigstens einer Kenngröße K1; Kn. In einem zweiten Regelungspunkt R2 kann eine zeitliche Positionierung relativ zur gewählten Kenngrößen erfolgen (zeitliche Justage). In einem zweiten Schritt S2 erfolgt ein Auswerten einer den Parameterverlauf kennzeichnenden Kurve PK, PK', umfassend eine Sollwertdefinition S2.1. In einem dritten Regelungspunkt R3 erfolgt optional eine Überprüfung von Sollwert-Definitionen bzw. eine Plausibilitätsprüfung, insbesondere eine Anpassung eines adäquaten Zeitintervalls für das Definieren des Sollwertes. In einem dritten Schritt S3 erfolgt ein Vergleichen, insbesondere umfassend das Vergleichen S3.1 einzelner Messwerte mit kurvenspezifisch definierten Sollwerten oder zusätzlich auch das Vergleichen S3.2 basierend auf einem oder mehreren Toleranz- und Hüllkurvenkriterien (Fig. 7). In einem vierten Regelungspunkt R4 erfolgt optional eine Auswahl bzw. Anpassung von Qualitätskriterien. In einem vierten Schritt S4 erfolgt ein Auswerten der Qualität, insbesondere umfassend ein Charakterisieren S4.1 als hochwertiges Teil (insbesondere durch erste Kennzahl Kz1) oder n.i.O.-Teil (insbesondere durch zweite Kennzahl Kz2). In einem fünften Regelungspunkt R5 erfolgt optional ein Ausschleusen von Ausschuss-Teilen. In einem fünften Schritt S5 erfolgt ein Ansteuern einer Ausgabeeinheit 11 und/oder einer Auswerfeinheit 43, wobei der Schritt S5 ein Markieren S5.1 des Schweißbauteils und/oder Zuordnen der Kennzeichnung zum Schweißbauteil (Attributieren einer ersten Kennzahl Kz1 oder einer zweiten Kz2) umfassen kann. Wahlweise kann auch die Anlage 40 angehalten werden. Der Schritt S5 kann ein Auswerfen S5.2 bzw. ein separates Ausschleusen von n.i.O.-Teilen umfassen.

### Bezugszeichenliste

- 1: Schweißbauteil
- 1a: erstes Fügeteil
- 1b: zweites Fügeteil
- 1.1: Kontaktfläche
- 10: S chweißparameterauswerteeinrichtung
- 11: Ausgabeeinheit, insbesondere mit Display (Anzeigeeinheit)
- 20: Computerprogrammprodukt
- 30: Steuerungseinrichtung
- 31: erste Messeinrichtung, insbesondere Kraftsensor
- 33: zweite Messeinrichtung, insbesondere Stromsensor
- 35: dritte Messeinrichtung, insbesondere Spannungssensor
- 37: vierte Messeinrichtung, insbesondere Widerstandssensor
- 39: fünfte Messeinrichtung, insbesondere Wegsensor
- 40: Widerstandsschweißvorrichtung, insbesondere KE-Widerstandsschweißanlage
- 40.1: Bearbeitungsstation
- 41: Anpressstempel bzw. Schweißzylinder
- 43: Auswerfeinheit (Ausschleusen)
- 45: Kondensator bzw. Kondensator-Batterie
- K1: erste Kenngröße, insbesondere Steigung (erste Ableitung)
- K2: zweite Kenngröße, insbesondere zweite Ableitung
- K3: dritte Kenngröße, insbesondere relative Position (insbesondere relativer Zeitbezug) der Kurve zur Kurve bzw. zu einer Kenngröße eines weiteren der Parameter
- K4: vierte Kenngröße, insbesondere Minimum
- K5: fünfte Kenngröße, insbesondere Maximum
- K6: sechste Kenngröße, insbesondere Wendepunkt
- K7: siebte Kenngröße, insbesondere Sattelpunkt
- K8: achte Kenngröße, insbesondere (fiktiver oder realer) Nulldurchgang
- K9: neunte Kenngröße, insbesondere Unstetigkeit
- Kn: weitere Kenngröße
- Kz1, Kz2: erste und zweite Kennzahl
- P1: erster Schweißparameter, insbesondere Schweißstrom
- P2: zweiter Schweißparameter, insbesondere Schweißspannung
- P3: dritter Schweißparameter, insbesondere Schweißkraft
- P4: vierter Schweißparameter, insbesondere Widerstand
- P5: fünfter Schweißparameter, insbesondere Abschmelzweg (relative Verlagerung bzw. Anpressweg)
- Pn: weiterer Schweißparameter
- HK: Hüllkurve
- NK: Normkurve
- PK: Kurve bzw. Verlauf eines jeweiligen Schweißparameters
- PK': weitere Kurve
- PK1: steigende Flanke
- PK2: fallende Flanke
- PKS: Kurvenschnittpunkt
- R1: erster Regelungspunkt (Anlage), insbesondere zum Regeln von Schweißparametern wie Kraft, Strom, Spannung
- R2: zweiter Regelungspunkt (Auswertung), insbesondere zeitliche Positionierung relativ zu Kenngrößen
- R3: dritter Regelungspunkt (Auswertung), insbesondere Überprüfung von Sollwert-Definitionen bzw. Plausibilität, insbesondere Anpassung eines Zeitintervalls für das Definieren des Sollwertes
- R4: vierter Regelungspunkt (Auswertung), insbesondere Auswahl bzw. Anpassung von Qualitätskriterien
- R5: fünfter Regelungspunkt (Anlage), insbesondere Ausschleusen von Ausschuss-Teilen
- S0: Bereitstellen bzw. Regeln von Schweißparametern, insbesondere Gleichstromparametern
- S1: erster Schritt, insbesondere Erfassen und Bereitstellen eines Verlaufes eines Parameters
- S1.1: Auswahl eines Zeitintervalls im Verlauf, insbesondere mit relativem Zeitbezug zu einer Kenngröße
- S2: zweiter Schritt, insbesondere Auswerten einer den Parameterverlauf kennzeichnenden Kurve
- S2.1: Sollwertdefinition
- S3: dritter Schritt, insbesondere Vergleichen
- S3.1: Vergleichen einzelner Messwerte mit kurvenspezifisch definierten Sollwerten
- S3.2: Vergleichen basierend auf Toleranz- und Hüllkurvenkriterien
- S4: vierter Schritt, insbesondere Auswerten der Qualität
- S4.1: Charakterisieren als hochwertiges i.O.-Teil oder als n.i.O.-Teil
- S5: Ansteuern einer Ausgabeeinheit und/oder einer Auswerfeinheit
- S5.1: Markieren des Schweißbauteils und/oder Zuordnen der Kennzeichnung zum Schweißbauteil
- S5.2: Auswerfen bzw. separates Ausschleusen von n.i.O.-Teilen
- t1: vordefinierter absoluter Zeitpunkt
- t2: vordefinierter Zeitpunkt mit relativem Zeitbezug
- Δ: Toleranzbereich
- ΔT1: erstes Zeitintervall
- ΔT2: zweites Zeitintervall
- V1: erster Sollwert
- V2: zweiter Sollwert
- Vn: weiterer Sollwert

## Patentansprüche

1. Qualitätsauswerteverfahren zum Charakterisieren von widerstandsgeschweißten Schweißbauteilen (1), insbesondere in konduktiven Kondensatorentladungs(KE)-Schweißanlagen, durch Auswerten wenigstens eines Schweißparameters (P1, Pn) aus der Gruppe: Schweißstrom, Schweißspannung, Schweißkraft, Widerstand, Abschmelzweg, Schweißzeit; wobei ein erfasster Verlauf des auszuwertenden Schweißparameters als Kurve (PK) des jeweiligen Schweißparameters bereitgestellt wird; **gekennzeichnet durch**
Auswerten der Kurve (PK) durch Auslesen wenigstens einer Kenngröße (Kl, Kn) der jeweiligen Kurve als Funktion der Zeit und wahlweise auch als Funktion wenigstens eines weiteren der Schweißparameter, wobei als Kenngrößen zumindest der Betrag des Schweißstroms und eine Steigungsänderung und/oder Gradientenänderung der Schweißstromkurve sowie der Zeitpunkt des jeweiligen Schweißstroms und der Steigungsänderung ausgewertet werden;
Vergleichen der Kenngrößen mit wenigstens einem Sollwert (V1, Vn) für die jeweilige Kenngröße, wobei als Kenngröße (Kl, Kn) zumindest die Steigung und/oder ein Gradient der jeweiligen Kurve (PK) ausgewertet wird, wobei der Sollwert basierend auf dem erfassten Verlauf oder Gradienten des auszuwertenden Schweißparameters definiert ist/wird; und
Auswerten der Qualität des Schweißbauteils (1) basierend auf dem Vergleich der Kenngrößen, insbesondere in Hinblick auf den Betrag einer Abweichung der Kenngrößen vom Sollwert.

2. Qualitätsauswerteverfahren nach dem vorhergehenden Verfahrensanspruch, wobei der Sollwert (V1, Vn) basierend auf dem erfassten Verlauf oder Gradienten in einem Zeitintervall von 0.1 bis 1000ms vor dem Vergleichszeitpunkt definiert ist/wird; und/oder das Auswerten der Kurve unabhängig von einer Abtastrate erfolgt; und/oder wobei das Auswerten der Kurve bei einer vordefinierten Abtastrate erfolgt, wobei der Sollwert (V1, Vn) basierend auf dem vorhergehenden Abtastwert oder basierend auf einer Gruppe von bis zu zehn der vorhergehenden Abtastwerte oder basierend auf einer Gruppe von bis zu 10% aller Abtastwerte definiert ist/wird.

3. Qualitätsauswerteverfahren nach einem der vorhergehenden Verfahrensansprüche, wobei als Kenngröße (Kl, Kn) zumindest ein Nulldurchgang und/oder ein Minimum oder Maximum oder Sattelpunkt oder ein Wendepunkt der Steigung und/oder des Gradienten der jeweiligen Kurve (PK) ausgewertet wird, insbesondere mit Zeitbezug; und/oder wobei als Kenngröße (Kl, Kn) zumindest die Ableitung der Steigung und/oder des Gradienten der jeweiligen Kurve (PK) ausgewertet wird, insbesondere ein Nulldurchgang und/oder ein Minimum oder Maximum oder Sattelpunkt oder ein Wendepunkt der Steigung und/oder des Gradienten, insbesondere mit Zeitbezug.

4. Qualitätsauswerteverfahren nach einem der vorhergehenden Verfahrensansprüche, wobei das Auswerten hinsichtlich einer Monotonie und/oder Stetigkeit der Kurve (PK) erfolgt, insbesondere hinsichtlich einer Abweichung von einer vordefinierbaren Monotonie der Stromkurve; und/oder wobei das Auswerten hinsichtlich eines Wendepunktes der zweiten Ableitung der Stromkurve hinter einem Maximum an einer fallenden Flanke (PK2) der Stromkurve erfolgt.

5. Qualitätsauswerteverfahren nach einem der vorhergehenden Verfahrensansprüche, wobei als Schweißstrom ein sinusformartiger Gleichstromimpuls bereitgestellt aus wenigstens einem Kondensator (45) ausgewertet wird, insbesondere über eine Zeitdauer von 0.1 bis 1000ms.

6. Qualitätsauswerteverfahren nach einem der vorhergehenden Verfahrensansprüche, wobei das Auswerten und/oder Vergleichen frequenzunabhängig erfolgt, insbesondere ausschließlich basierend auf der Kenngröße Steigung des Stromverlaufs und/oder Gradient des Stromverlaufs.

7. Qualitätsauswerteverfahren nach einem der vorhergehenden Verfahrensansprüche, wobei das Vergleichen durch Vergleich des zeitlichen Verlaufs der wenigstens einen Kenngröße (Kl, Kn) der Kurve (PK) mit einer Normkurve (NK) der entsprechenden Kenngröße erfolgt, wobei eine Abweichung der Kenngröße vom Sollwert an einer Mehrzahl von Vergleichspunkten der Kurve zu einer Mehrzahl von Messzeitpunkten erfolgt.

8. Qualitätsauswerteverfahren nach einem der vorhergehenden Verfahrensansprüche, wobei ein Wendepunkt der jeweiligen Kenngröße (K1, Kn), insbesondere ein Wendepunkt der Steigung und/oder eines Gradienten ausgewertet wird; und/oder wobei ein Nulldurchgang oder ein Minimum oder Maximum oder Sattelpunkt der Kenngröße (Kl, Kn), insbesondere der Steigung und/oder des Gradienten ausgewertet wird; und/oder wobei ein Schnittpunkt (PKS) der jeweiligen Kurve (PK) mit einer weiteren Kurve (PK') ausgewertet wird; und/oder wobei eine Unstetigkeit oder ein unstetiger Verlauf der jeweiligen Kenngröße (Kl, Kn) ausgewertet wird; und/oder wobei wenigstens zwei oder drei Wendepunkte der jeweiligen Kurve (PK) ausgewertet werden, insbesondere in einem Stromverlauf, insbesondere in einem Zeitintervall von 0.01 bis 100ms.

9. Qualitätsauswerteverfahren nach einem der vorhergehenden Verfahrensansprüche, wobei das Auswerten eines Abschnitts der Kurve nach einem Wendepunkt oder nach einem Maximum bezüglich einer fallenden Flanke (PK2) der Kurve erfolgt, insbesondere mit der Steigungs-Kenngröße.

10. Qualitätsauswerteverfahren nach einem der vorhergehenden Verfahrensansprüche, wobei der Vergleich zu wenigstens einem vordefinierten Zeitpunkt im Verlaufe der jeweiligen Schweißung vorgenommen wird, insbesondere wenn eine Änderungsrate einen Mindestschwellwert überschreitet, insbesondere zeitbezogen; oder wobei der Vergleich in einem vordefinierten Zeitabstand relativ zu einem Wendepunkt oder Maximum der Kurve erfolgt, insbesondere bezüglich einem Maximum einer Stromkurve.

11. Qualitätsauswerteverfahren nach einem der vorhergehenden Verfahrensansprüche, wobei das Verfahren wiederholt durchgeführt wird bei mehrstufigem Verschweißen, insbesondere bei sequentiellem Mehrfach-Entladen, basierend auf wenigstens zwei Kurven (PK, PK'), insbesondere basierend auf wenigstens zwei unabhängig voneinander erfassten Kurven, insbesondere beim Anlassen oder Spannungsarmglühen des Schweißbauteils, oder basierend auf einem Kurvenpaar, bei welchem eine nachfolgende Kurve von einer fallenden Flanke (PK2) einer vorhergehenden Kurve abgeht, insbesondere beim sequentiellen Mehrfach-Entladen insbesondere mittels mehrerer Kondensatoren.

12. Verfahren zum Ausführen und Qualitätsüberwachen einer Widerstandsschweißung, insbesondere einer KE-Schweißung, mittels eines Qualitätsauswerteverfahrens nach einem der vorhergehenden Verfahrensansprüche an einer Widerstandsschweißvorrichtung (40), wobei das Verfahren beim konduktiven Widerstandspressschweißen durchgeführt wird, insbesondere bei einer Schweißkraft im Bereich von 0.1 bis 1.000kN; und/oder wobei das Verfahren als Buckel- oder Einpressschweißen durchgeführt wird, wobei eine Kurve des entsprechenden Schweißkraft-Parameters analysiert wird, insbesondere bei einem Schweißstrom im Bereich von 1 bis 10.000kA; und/oder wobei das Verfahren mittels impulsartiger Gleichstrom-Entladung durchgeführt wird; und/oder wobei das Verfahren ferner umfasst: Ansteuern einer Ausgabeeinheit (11) und/oder einer Auswerfeinheit (43) der Widerstandsschweißvorrichtung (40) in Abhängigkeit des Vergleichs und der ausgewerteten Qualität, zum Charakterisieren oder zum teil- oder vollautomatischen Auswerfen qualitätsmangelhafter Schweißbauteile (1), insbesondere während des Schweißens.

13. Computerprogrammprodukt (20) eingerichtet zum Charakterisieren von widerstandsgeschweißten Schweißbauteilen (1), insbesondere in KE-Schweißanlagen, durch Auswerten wenigstens eines Schweißparameters (P1, Pn) aus der Gruppe: Schweißstrom, Schweißspannung, Schweißkraft, Widerstand, Abschmelzweg, Schweißzeit; wobei ein erfasster zeitlicher Verlauf des auszuwertenden Schweißparameters als Kurve (PK) des jeweiligen Schweißparameters bereitgestellt wird, wobei als Kenngrößen zumindest der Betrag des Schweißstroms und eine Steigungsänderung und/oder Gradientenänderung der Schweißstromkurve sowie der Zeitpunkt des jeweiligen Schweißstroms und der Steigungsänderung ausgewertet werden, und durch Vergleichen wenigstens der Kenngrößen (K1, Kn) der jeweiligen Kurven mit wenigstens einem basierend auf dem erfassten Verlauf oder Gradienten des auszuwertenden Schweißparameters definierten Sollwert (V) für die jeweilige Kenngröße, wobei als Kenngröße (K1, Kn) zumindest die Steigung und/oder ein Gradient der jeweiligen Kurve (PK) ausgewertet wird, und durch Auswerten der Qualität basierend auf dem Vergleich, und durch Korrelation des jeweiligen Schweißbauteils (1) mit einer ersten Kennzahl (Kz1) für ausreichend hohe Qualität oder mit einer zweiten Kennzahl (Kz2) für nicht ausreichende Qualität, insbesondere jeweils individuell spezifisch in Bezug auf die jeweilige Kenngröße, insbesondere eingerichtet zum Durchführen eines Qualitätsauswerteverfahrens nach einem der vorhergehenden Verfahrensansprüche.

14. Schweißparameterauswerteeinrichtung (10) eingerichtet zur Charakterisierung von widerstandsgeschweißten Schweißbauteilen (1), insbesondere simultan während des Widerstandsschweißens, insbesondere in Kondensatorentladungs(KE)-Schweißanlagen, eingerichtet zum Auswerten wenigstens eines Schweißparameters (P1, Pn) aus der Gruppe: Schweißstrom, Schweißspannung, Schweißkraft, Widerstand, Abschmelzweg, Schweißzeit; mit einer Ausgabeeinheit (11) zum Anzeigen oder Ausgeben der Schweißparameter oder Kurven (PK) der Schweißparameter, wobei die Schweißparameterauswerteeinrichtung eingerichtet ist zum Bereitstellen einer Kurve des jeweiligen Schweißparameters;
**dadurch gekennzeichnet, dass** die Schweißparameterauswerteeinrichtung eingerichtet ist zur Auswertung der jeweiligen Kurve (PK) durch Auslesen wenigstens einer Kenngröße (K1, Kn) der jeweiligen Kurve, wobei als Kenngrößen zumindest der Betrag des Schweißstroms und eine Steigungsänderung und/oder Gradientenänderung der Schweißstromkurve sowie der Zeitpunkt des jeweiligen Schweißstroms und der Steigungsänderung auswertbar sind, und eingerichtet ist zum Vergleich der Kenngrößen mit wenigstens einem basierend auf dem erfassten Verlauf oder Gradienten des auszuwertenden Schweißparameters definierten Sollwert (V) für die jeweilige Kenngröße, wobei als Kenngröße (K1, Kn) zumindest die Steigung und/oder ein Gradient der jeweiligen Kurve (PK) ausgewertet wird, und eingerichtet ist zur Auswertung der Qualität basierend auf dem Vergleich.

15. Widerstandsschweißvorrichtung (40) mit einer Steuerungseinrichtung (30) eingerichtet zum Steuern oder Regeln der Widerstandsschweißvorrichtung (40) beim Verschweißen von Schweißbauteilen (1), umfassend wenigstens eine Schweißparameterauswerteeinrichtung (10) nach dem vorhergehenden Anspruch, und wobei die Schweißparameterauswerteeinrichtung (10) Messeinrichtungen zum Erfassen des jeweiligen Schweißparameters (P1, Pn) aufweist.

## Claims

1. Quality evaluation method for characterising resistance-welded welding components (1), in particular in conductive capacitor discharge (CD) welding installations, by evaluating at least one welding parameter (P1, Pn) from the group: welding current, welding voltage, welding force, resistance, deposition/melting path, welding time; wherein a detected curve of the welding parameter to be evaluated is provided as a curve (PK) of the respective welding parameter;
**characterized by**
evaluating the curve (PK) by reading out at least one characteristic variable (Kl, Kn) of the respective curve as a function of time and optionally also as a function of at least one further of the welding parameters, wherein at least the amount of the welding current and a change in slope and/or change in gradient of the welding current curve as well as the time of the respective welding current and the change in slope are evaluated as characteristic variables;
comparing the characteristic variables with at least one setpoint value (V1, Vn) for the respective characteristic variable, wherein at least the slope and/or a gradient of the respective curve (PK) is evaluated as characteristic variable (K1, Kn), wherein the setpoint value is defined on the basis of the detected course or gradient of the welding parameter to be evaluated; and
evaluating the quality of the welding component (1) based on the comparison of the characteristic values, in particular with regard to the amount of a deviation of the characteristic values from the setpoint value.

2. Quality evaluation method according to the preceding method claim, wherein the setpoint value (V1, Vn) is defined based on the detected course or gradient in a time interval of 0.1 to 1,000ms before the time of comparison; and/or wherein the evaluation of the curve is carried out independently of a sampling rate; and/or wherein the evaluation of the curve is carried out at a predefined sampling rate, wherein the setpoint value (V1, Vn) is defined based on the preceding sample value or based on a group of up to ten of the preceding sample values or based on a group of up to 10% of all sample values.

3. Quality evaluation method according to one of the preceding method claims, wherein at least one zero crossing and/or a minimum or maximum or saddle point or an inflection point of the slope and/or of the gradient of the respective curve (PK) is evaluated as a characteristic variable (Kl, Kn), in particular with reference to time; and/or wherein at least the derivative of the slope and/or of the gradient of the respective curve (PK) is evaluated as a characteristic variable (Kl, Kn), in particular a zero crossing and/or a minimum or maximum or saddle point or an inflection point of the slope and/or of the gradient, in particular with reference to time.

4. Quality evaluation method according to one of the preceding method claims, wherein the evaluation is carried out with regard to a monotonicity and/or continuity of the curve (PK), in particular with regard to a deviation from a predefinable monotonicity of the current curve; and/or wherein the evaluation is carried out with regard to an inflection point of the second derivative of the current curve behind a maximum on a falling flank (PK2) of the current curve.

5. Quality evaluation method according to one of the preceding method claims, wherein a sinusoidal direct current pulse provided from at least one capacitor (45) is evaluated as the welding current, in particular over a period of 0.1 to 1,000ms.

6. Quality evaluation method according to one of the preceding method claims, wherein the evaluation and/or comparison is carried out independently of frequency, in particular exclusively on the basis of the characteristic variable slope of the current curve and/or gradient of the current curve.

7. Quality evaluation method according to one of the preceding method claims, wherein the comparison is carried out by comparing the chronological sequence of the at least one characteristic variable (K1, Kn) of the curve (PK) with a standard curve (NK) of the corresponding characteristic variable, wherein a deviation of the characteristic variable from the setpoint value is carried out at a plurality of comparison points of the curve at a plurality of measurement times.

8. Quality evaluation method according to one of the preceding method claims, wherein an inflection point of the respective characteristic variable (K1, Kn), in particular an inflection point of the slope and/or of a gradient is evaluated; and/or wherein a zero crossing or a minimum or maximum or saddle point of the characteristic variable (K1, Kn), in particular of the slope and/or of the gradient is evaluated; and/or wherein an intersection point (PKS) of the respective curve (PK) with a further curve (PK') is evaluated; and/or wherein a discontinuity or a discontinuous course of the respective characteristic variable (K1, Kn) is evaluated; and/or wherein at least two or three inflection points of the respective curve (PK) are evaluated, in particular in a current course, in particular in a time interval of 0.01 to 100ms.

9. Quality evaluation method according to one of the preceding method claims, wherein the evaluation of a section of the curve is carried out after an inflection point or after a maximum with respect to a falling flank (PK2) of the curve, in particular with the characteristic variable referring to the slope.

10. Quality evaluation method according to one of the preceding method claims, wherein the comparison is carried out at at least one predefined time in the course of the respective weld, in particular when a rate of change exceeds a minimum threshold value, in particular with reference to time; or wherein the comparison is carried out at a predefined time interval relative to an inflection point or maximum of the curve, in particular with reference to a maximum of a current curve.

11. Quality evaluation method according to one of the preceding method claims, wherein the method is carried out repeatedly in context with multi-stage welding, in particular in context with sequential multiple discharging, based on at least two curves (PK, PK'), in particular based on at least two curves detected independently of one another, in particular during tempering or stress-relieving annealing of the welding component, or based on a pair of curves in which a subsequent curve departs from a falling flank (PK2) of a preceding curve, in particular in context with sequential multiple discharging, especially by means of a plurality of capacitors.

12. A method of performing and quality monitoring of a resistance welding process, in particular a CD welding process, by means of a quality evaluation method according to one of the preceding method claims on a resistance welding device (40), wherein the method is performed during conductive resistance pressure welding, in particular at a welding force in the range of 0.1 to 1,000kN; and/or wherein the method is performed as resistance projection or pressure welding, wherein a curve of the corresponding welding force parameter is analysed, in particular at a welding current in the range of 1 to 10,000kA; and/or wherein the method is performed by means of pulsed DC discharge; and/or wherein the method further comprises: controlling an output unit (11) and/or an ejection unit (43) of the resistance welding device (40) as a function of the comparison and the evaluated quality, for characterising or for partially or fully automatically ejecting quality-defective welding components (1), in particular during the welding process.

13. Computer program product (20) configured for characterising resistance-welded welding components (1), in particular in CD welding installations, by evaluating at least one welding parameter (P1, Pn) from the group: welding current, welding voltage, welding force, resistance, deposition/melting path, welding time; wherein a detected temporal course of the welding parameter to be evaluated is provided as a curve (PK) of the respective welding parameter, wherein at least the amount of the welding current and a change in slope and/or change in gradient of the welding current curve as well as the time of the respective welding current and of the change in slope are evaluated as characteristic variables, and by comparing at least the characteristic variables (Kl, Kn) of the respective curves with at least one setpoint value (V), defined on the basis of the detected course or gradient of the welding parameter to be evaluated, for the respective characteristic variable, wherein at least the slope and/or a gradient of the respective curve (PK) is evaluated as a characteristic variable (K1, Kn), and by evaluating the quality based on the comparison, and by correlating the respective welding component (1) with a first characteristic variable (Kz1) for sufficiently high quality or with a second characteristic variable (Kz2) for insufficient quality, in particular in each case individually specifically with respect to the respective characteristic variable, in particular configured for carrying out a quality evaluation method according to one of the preceding method claims.

14. Welding parameter evaluation device (10) configured for characterising resistance-welded welding components (1), in particular simultaneously during resistance welding, in particular in capacitor discharge (CD) welding installations, configured for evaluating at least one welding parameter (P1, Pn) from the group: welding current, welding voltage, welding force, resistance, deposition/melting path, welding time; with an output unit (11) for displaying or outputting the welding parameters or curves (PK) of the welding parameters, wherein the welding parameter evaluation device is configured to provide a curve of the respective welding parameter; **characterized in that** the welding parameter evaluation device is configured for evaluating the respective curve (PK) by reading out at least one characteristic variable (K1, Kn) of the respective curve, wherein at least the amount of the welding current and a change in slope and/or change in gradient of the welding current curve as well as the time of the respective welding current and the change in slope can be evaluated as characteristic variables, wherein the welding parameter evaluation device is configured for comparing the characteristic variables with at least one setpoint value (V), defined on the basis of the detected profile or gradient of the welding parameter to be evaluated, for the respective characteristic variable, wherein at least the slope and/or a gradient of the respective curve (PK) can be evaluated as the characteristic variable (Kl, Kn), and wherein the welding parameter evaluation device is configured for evaluating the quality on the basis of the comparison.

15. Resistance welding device (40) having a control device (30) configured for controlling or regulating the resistance welding device (40) during the welding of welding components (1), comprising at least one welding parameter evaluation device (10) according to the preceding claim, and wherein the welding parameter evaluation device (10) exhibits measuring devices for detecting the respective welding parameter (P1, Pn).

## Revendications

1. Procédé d'évaluation de la qualité pour caractériser des composants soudés (1) qui sont soudés par résistance, en particulier dans des installations de soudage par décharge de condensateur (CD) par conduction, par évaluation d'au moins un paramètre de soudage (P1, Pn) du groupe : courant de soudage, tension de soudage, force de soudage, résistance, trajet de fusion, temps de soudage ; dans lequel une évolution/courbe détectée du paramètre de soudage à évaluer est mise à disposition sous forme d'une courbe (PK) du paramètre de soudage respectif ;
**caractérisé par**
évaluation de la courbe (PK) par triage d'au moins une grandeur caractéristique (K1, Kn) de la courbe respective en fonction du temps et, au choix, également en fonction d'au moins un autre des paramètres de soudage, dans lequel au moins la valeur du courant de soudage et une variation de pente et/ou une variation de gradient de la courbe de courant de soudage ainsi que l'instant du courant de soudage respectif et de la variation de pente sont évalués comme grandeurs caractéristiques ;
comparer les grandeurs caractéristiques avec au moins une valeur nominale (V1, Vn) pour la grandeur caractéristique respective, dans lequel au moins la pente et/ou un gradient de la courbe respective (PK) sont évalués comme grandeur caractéristique (Kl, Kn), dans lequel la valeur nominale est définie sur la base de l'évolution/courbe détectée ou du gradient détecté du paramètre de soudage à évaluer ; et
évaluer la qualité de la pièce soudée (1) sur la base de la comparaison des paramètres, en particulier en ce qui concerne la valeur d'un écart des paramètres par rapport à la valeur nominale.

2. Procédé d'évaluation de la qualité selon la revendication précédente, dans lequel la valeur nominale (V1, Vn) est déterminée sur la base de l'évolution détectée ou du gradient détecté dans un intervalle de temps de 0.1 à 1000ms avant l'instant de comparaison ; et/ou dans lequel l'évaluation de la courbe s'effectue indépendamment d'une fréquence d'échantillonnage ; et/ou dans lequel l'évaluation de la courbe s'effectue à une fréquence d'échantillonnage prédéfinie, dans lequel la valeur nominale (V1, Vn) est définie sur la base de l'échantillonnage précédent ou sur la base d'un groupe de jusqu'à dix des échantillonnages précédents ou sur la base d'un groupe de jusqu'à 10% de tous les échantillonnages.

3. Procédé d'évaluation de la qualité selon l'une des revendications précédentes, dans lequel au moins un passage par zéro et/ou un minimum ou un maximum ou un point de selle ou un point d'inflexion de la pente et/ou du gradient de la courbe respective (PK) sont évalués comme grandeur caractéristique (Kl, Kn), en particulier avec une référence temporelle ; et/ou dans lequel au moins la dérivée de la pente et/ou du gradient de la courbe respective (PK) sont évalués comme grandeur caractéristique (Kl, Kn), en particulier un passage par zéro et/ou un minimum ou un maximum ou un point de selle ou un point d'inflexion de la pente et/ou du gradient, en particulier avec une référence temporelle.

4. Procédé d'évaluation de la qualité selon l'une des revendications précédentes, dans lequel l'évaluation est effectuée en ce qui concerne une monotonie et/ou une continuité de la courbe (PK), en particulier en ce qui concerne un écart par rapport à une monotonie prédéfinissable de la courbe de courant ; et/ou dans lequel l'évaluation est effectuée en ce qui concerne un point d'inflexion de la dérivée seconde de la courbe de courant derrière un maximum sur un flanc descendant (PK2) de la courbe de courant.

5. Procédé d'évaluation de la qualité selon l'une des revendications précédentes, dans lequel une impulsion de courant continu de forme sinusoïdale fournie par au moins un condensateur (45) est évaluée comme courant de soudage, notamment sur une durée de 0,1 à 1000ms.

6. Procédé d'évaluation de la qualité selon l'une des revendications précédentes, dans lequel l'évaluation et/ou la comparaison sont effectués indépendamment de la fréquence, en particulier exclusivement sur la base de la grandeur caractéristique suivante : pente de la courbe de courant et/ou gradient de la courbe de courant.

7. Procédé d'évaluation de la qualité selon l'une des revendications de procédé précédentes, dans lequel la comparaison est effectuée par comparaison de l'évolution/courbe dans le temps de l'au moins une grandeur caractéristique (Kl, Kn) de la courbe (PK) avec une courbe nominale/normalisée (NK) de la grandeur caractéristique correspondante, dans lequel un écart de la grandeur caractéristique par rapport à la valeur nominale s'effectue en une pluralité de points de comparaison de la courbe à une pluralité de moments/temps de mesure.

8. Procédé d'évaluation de la qualité selon l'une des revendications précédentes, dans lequel un point d'inflexion de la grandeur caractéristique respective (Kl, Kn) est évalué, en particulier un point d'inflexion de la pente et/ou d'un gradient ; et/ou dans lequel un passage par zéro ou un minimum ou un maximum ou un point de selle de la grandeur caractéristique (Kl, Kn) est évalué, en particulier de la pente et/ou du gradient ; et/ou dans lequel un point d'intersection (PKS) de la courbe respective (PK) avec une autre courbe (PK') est évalué ; et/ou dans lequel une discontinuité ou une évolution discontinue de la grandeur caractéristique respective (K1, Kn) est évaluée ; et/ou dans lequel au moins deux ou trois points d'inflexion de la courbe respective (PK) sont évalués, en particulier dans une courbe de courant, notamment dans un intervalle de temps de 0.01 à 100ms.

9. Procédé d'évaluation de la qualité selon l'une des revendications précédentes, dans lequel l'évaluation d'une partie de la courbe est effectuée après un point d'inflexion ou après un maximum par rapport à un flanc descendant (PK2) de la courbe, en particulier concernant la grandeur caractéristique de la pente.

10. Procédé d'évaluation de la qualité selon l'une des revendications précédentes, dans lequel la comparaison est effectuée à au moins un moment prédéfini au cours du soudage respectif, en particulier lorsqu'un taux de variation dépasse une valeur seuil minimale, en particulier en fonction du temps ; ou dans lequel la comparaison est effectuée à un intervalle de temps prédéfini par rapport à un point d'inflexion ou un maximum de la courbe, en particulier par rapport à un maximum d'une courbe de courant.

11. Procédé d'évaluation de la qualité selon l'une des revendications précédentes, dans lequel le procédé est exécuté de manière répétée lors d'un soudage en plusieurs étapes, en particulier lors d'une décharge multiple séquentielle, sur la base d'au moins deux courbes (PK, PK'), en particulier sur la base d'au moins deux courbes détectées indépendamment l'une de l'autre, en particulier lors d'un procédé pour recuire ou lors d'un procédé de recuit de détente de la pièce soudée, ou sur la base d'une paire de courbes dans laquelle une courbe suivante se détache d'un flanc descendant (PK2) d'une courbe précédente, en particulier lors d'une décharge multiple séquentielle notamment au moyen de plusieurs condensateurs.

12. Procédé pour réaliser un soudage par résistance et contrôler la qualité du procédé de soudage par résistance, en particulier d'un soudage CD, au moyen d'un procédé d'évaluation de la qualité selon l'une des revendications précédentes sur un dispositif de soudage par résistance (40), dans lequel le procédé est réalisé lors d'un soudage par résistance par pression conductif, en particulier avec une force de soudage de 0.1 à 1 000kN ; et/ou dans lequel le procédé est réalisé sous la forme d'un soudage par bossages ou d'un soudage par pression, dans lequel une courbe du paramètre de force de soudage correspondant est analysée, en particulier à un courant de soudage de 1 à 10 000kA ; et/ou dans lequel le procédé est réalisé au moyen d'une décharge de courant continu par impulsion ; et/ou dans lequel le procédé comprend en outre : commander une unité de sortie (11) et/ou une unité d'éjection (43) du dispositif de soudage par résistance (40) en fonction de la comparaison et de la qualité évaluée, pour caractériser ou pour éjecter de manière partiellement ou entièrement automatique des composants soudés (1) présentant un défaut de qualité, notamment pendant le soudage.

13. Produit de programme informatique (20) conçu pour caractériser des composants soudés (1) qui sont soudés par résistance, en particulier dans des installations de soudage CD, en évaluant au moins un paramètre de soudage (P1, Pn) du groupe : courant de soudage, tension de soudage, force de soudage, résistance, trajet de fusion, temps de soudage ; dans lequel une évolution temporelle détectée du paramètre de soudage à évaluer est mise à disposition sous forme de courbe (PK) du paramètre de soudage respectif, dans lequel au moins la valeur du courant de soudage et une variation de pente et/ou une variation de gradient de la courbe de courant de soudage ainsi que le moment du courant de soudage respectif et de la variation de pente sont évalués en tant que grandeurs caractéristiques, et dans lequel au moins les grandeurs caractéristiques (Kl, Kn) des courbes respectives sont comparés avec au moins une valeur nominale (V) définie sur la base de l'évolution/courbe ou du gradient détecté du paramètre de soudage à évaluer pour la grandeur caractéristique respective, dans lequel au moins la pente et/ou un gradient de la courbe respective (PK) sont évalués en tant que grandeur caractéristique (Kl, Kn), et dans lequel la qualité est évaluée sur la base de la comparaison, et dans lequel la pièce soudée respective (1) est corrélée avec un premier indice (Kz1) pour une qualité suffisamment élevée ou avec un deuxième indice (Kz2) pour une qualité insuffisante, en particulier à chaque fois de manière spécifique individuelle par rapport à la grandeur caractéristique respective, en particulier conçu pour réaliser un procédé d'évaluation de la qualité selon l'une des revendications de procédé précédentes.

14. Dispositif d'évaluation de paramètres de soudage (10) conçu pour caractériser des composants soudés (1) qui sont soudés par résistance, en particulier simultanément pendant le soudage par résistance, en particulier dans des installations de soudage par décharge de condensateur (CD), conçu pour évaluer au moins un paramètre de soudage (P1, Pn) du groupe : courant de soudage, tension de soudage, force de soudage, résistance, trajet de fusion, temps de soudage ; avec une unité de sortie (11) pour afficher ou sortir les paramètres de soudage ou les courbes (PK) des paramètres de soudage, dans lequel le dispositif d'évaluation des paramètres de soudage est conçu pour mettre à disposition une courbe du paramètre de soudage respectif ;
**caractérisé en ce que** le dispositif d'évaluation des paramètres de soudage est conçu pour évaluer la courbe respective (PK) par triage d'au moins une grandeur caractéristique (Kl, Kn) de la courbe respective, dans lequel au moins la valeur du courant de soudage et une variation de pente et/ou une variation de gradient de la courbe de courant de soudage ainsi que le moment du courant de soudage respectif et de la variation de pente peuvent être évalués en tant que grandeurs caractéristiques, et conçu pour comparer les grandeurs caractéristiques avec au moins une valeur nominale (V) définie sur la base de l'évolution/courbe ou du gradient détecté du paramètre de soudage à évaluer pour la grandeur caractéristique respective, dans lequel au moins la pente et/ou un gradient de la courbe respective (PK) sont évalués comme grandeur caractéristique (Kl, Kn), et conçu pour évaluer la qualité sur la base de la comparaison.

15. Dispositif de soudage par résistance (40) avec un dispositif de commande (30) conçu pour commander ou régler le dispositif de soudage par résistance (40) lors du soudage de composants soudés (1), comprenant au moins un dispositif d'évaluation de paramètres de soudage (10) selon la revendication précédente, et dans lequel le dispositif d'évaluation de paramètres de soudage (10) présente des dispositifs de mesure pour détecter le paramètre de soudage respectif (P1, Pn).
